# EUROPÄISCHE PATENTSCHRIFT

(11) **EP 1 247 956 B1**
(45) Veröffentlichungstag und Bekanntmachung des Hinweises auf die Patenterteilung: **08.08.2007**
(21) Anmeldenummer: 02005206.4
(22) Anmeldetag: 07.03.2002
(51) Int. Cl.: F02B 1/04, F02B 75/12

(54) **Brennkraftmaschine mit Direkteinspritzung und Verfahren zum Betreiben dieser**
Direct injected internal combustion engine and method of operating
Moteur à combustion interne à injection directe et procédé d'opération

(30) Priorität: 07.04.2001 DE 10117520
(43) Veröffentlichungstag der Anmeldung: 09.10.2002
(73) Patentinhaber: Volkswagen Aktiengesellschaft, 38436 Wolfsburg (DE)
(72) Erfinder: Spiegel, Leo, Dr., 71665 Vaihingen/Enz (DE); Söhlke, Günter, 38518 Gifhorn (DE); Suck, Gerrit, Dr., 31275 Lehrte (DE)
(74) Vertreter: Zeitler - Volpert - Kandlbinder

(56) Entgegenhaltungen:
- EP-A- 0 048 333
- EP-A- 0 857 793
- WO-A-00/51751
- DE-A- 3 212 562
- DE-A- 3 713 835
- DE-C- 814 682
- DE-C- 4 123 721
- US-B1- 6 178 944
- PATENT ABSTRACTS OF JAPAN vol. 2000, no. 03, 30. März 2000 (2000-03-30) & JP 11 336615 A (NISSAN DIESEL MOTOR CO LTD), 7. Dezember 1999 (1999-12-07)

## Beschreibung

Die Erfindung betrifft eine Brennkraftmaschine, insbesondere Ottomotor, mit einer Einspritzvorrichtung für Kraftstoff, gemäß dem Oberbegriff des Anspruchs 1 und ein Verfahren zum Betreiben dieser gemäß dem Oberbegriff des Anspruchs 11.

Benzinmotoren mit Direkteinspritzung des Kraftstoffes in den Brennraum, d.h. nicht in den Ansaugtrakt, leiden besonders an dem Problem der Bauteilverkokung. Eine Verkokung tritt besonders an der Ventilkehlung von Einlassventilen auf. Eine genauere Analyse, wie es zu dieser Verkokung kommt gibt folgendes Ergebnis: Zuerst bilden Öl- und Kraftstoffkomponenten einen klebrigen Belag auf den Bauteilen. Dabei handelt es sich vorrangig um langkettige und verzweigte Kohlenwasserstoffe, d.h. die schwer flüchtigen Komponenten von Öl und Kraftstoff. Aromaten kleben hierbei besonders gut. Dieser klebrige Grundbelag dient als Grundlage für die Anlagerung von Rußpartikeln. Dadurch entsteht eine poröse Oberfläche, in die sich wiederum Öl- und Kraftstoffkomponenten einlagern. Dieser Vorgang stellt einen Kreisprozess dar, durch den die Schichtdicke der Verkokung ständig zunimmt. Vor allem im Bereich der Einlassventile stammen die Ablagerungen aus Blow-By-Gasen sowie innerer und externer Abgasrückführung, wobei die Blow-By-Gase sowie das zurückgeführte Abgas mit dem Einlassventil direkt in Berührung kommen.

Insbesondere im Bereich der Ventilkehlung der Einlassventile ist eine übermäßige Verkokung aus folgenden Gründen äußerst negativ: Bei Otto-Direkteinspritzern ist die erfolgreiche Entflammung der geschichteten Ladung erheblich von einer korrekten Ausbildung der Zylinderinnenströmung abhängig, die für einen sicheren Transport des eingespritzten Kraftstoffes zur Zündkerze sorgt, um dort eine sichere Entflammung zu gewährleisten. Ein Verkokungsbelag des Einlassventils im Bereich der Ventilkehlung kann jedoch die Tumbleströmung ggf. so stark stören, dass es als Folge davon zu Zündaussetzern kommt. Diese können jedoch u.U. zu einer irreversiblen Schädigung eines im Abgastrakt angeordneten Katalysators zur Abgasreinigung führen. Ferner bildet der Verkokungsbelag des Einlassventils im Bereich der Ventilkehlung einen Strömungswiderstand aus, der besonders im oberen Last- und Drehzahlbereich der Brennkraftmaschine zu erheblichen Leistungsverlusten aufgrund unzureichender Zylinderfüllung führen kann. Des Weiteren verhindert der Verkokungsbelag des Einlassventils im Bereich der Ventilkehlung ggf. einen korrekten Ventilschluss, so dass es zu Kompressionsverlusten und damit sporadischen Zündaussetzern kommt. Wiederum könnte dadurch der Katalysator irreversibel geschädigt werden. Von dem Verkokungsbelag des Einlassventils im Bereich der Ventilkehlung können sich ggf. kleine Partikel lösen und in den Katalysator gelangen. Dort sind diese heißen Partikel ggf. Ursache für Sekundärreaktionen mit entsprechender lokaler Schädigung des Katalysators. Beispielsweise brennt sich ein Loch in die Katalysatorstruktur.

Insbesondere am Ventilschaft stromab eines Trennbleches im Einlasskanal zeigen sich kugelförmige Ablagerungen. Durch das Abtropfen von schwer siedenden Kohlenwasserstoffen von dem Trennblech gegen den Ventilhals bzw. Ventilschaft bauen sich dort mit der Zeit kugelförmige Verkokungen nach dem zuvor erläuterten Ablauf auf. Diese Ablagerungen am Ventilschaft können durch unerwünschte Verwirbelungen und turbulente Strömungen um die kugelige Verkokung Strömungsdefizite zur Folge haben. Eine Ausbildung der stabilen Tumbleströmung von Zyklus zu Zyklus ist dadurch ggf. nachhaltig gestört.

Eine nahe liegende Lösung wäre, diese Quellen für Ablagerungen beispielsweise vom Einlassventil dadurch fern zu halten dass man auf die Einleitung von Blow-By-Gasen in den Ansaugtrakt sowie auf eine Abgasrückführung ganz verzichtet. Jedoch sind bei den Brennverfahren von modernen Hubkolbenbrennkraftmaschinen aus Emissions- und Verbrauchsgründen zumindest eine externe Abgasrückführung sowie das Einleiten von Blow-By-Gasen in den Ansaugtrakt zwingend erforderlich, so dass dieser Ansatz nicht möglich ist.

Dokument EP-A-857 793 betrifft eine hoch korrosionsfeste Legierung für Einlass- und Auslassventile von Dieselmotoren. Die thermischen Auswirkungen der hoch korrosionsfesten Legierung werden jedoch nicht erörtert.

Aus der US 4 809 662 ist es bekannt, einen Zündzeitpunkt soweit vor zu verstellen, dass sich eine erhöhte Temperatur im Brennraum ergibt, so dass dieser von Ablagerungen gereinigt wird.

Die EP 0 785 350 A2 beschreibt eine Kühlmaßnahme für eine Austrittsöffnung einer Kraftstoffeinspritzung, um Ablagerungen an der Einspritzöffnung zu verhindern. In ähnlicher Weise ist es aus der DE 197 47 268 A1 bekannt, durch Einspritzen von Zusatzflüssigkeit einen Düsenkörper der Einspritzdüse zu kühlen, was einer Verkokung der Düsenbohrung entgegen wirken soll.

Um Ablagerungen an der Einspritzdüse zu verhindern ist es aus der EP 0 798 560 A1 bekannt, auf einer Düsenhalteroberfläche etwas Kraftstoff zu halten.

Mit einer Verhinderung der Verkokung der Zündkerze beschäftigt sich die DE 197 56 119 A1. Hierzu wird von einem Steuergerät die Einspritzung von Kraftstoff vor der Entzündung desselben beendet. Dies soll die Verkokung der Zündkerze insbesondere beim Starten der Brennkraftmaschine vermeiden. In der DE 199 11 023 A1 wird zur Vermeidung der Verkokung der Zündkerze der Kraftstoff derart kegelförmig eingespritzt, dass eine Benetzung der Zündkerze mit Kraftstoff vermieden ist. Die US 5 913 302 beschreibt eine Reinigungsstrategie für eine Zündkerze einer Zweitakt-Brennkraftmaschine. Hierzu wird eine Zünddauer kurzfristig verlängert, wodurch Kohlenstoffablagerungen an der Zündkerze abgebaut werden.

Die US 4 703 734 beschreibt eine Ventilüberschneidung und ein sequentielles Öffnen von Einlassventilen für den Betrieb bei niedrigen Drehzahlen sowie für den Betrieb bei hohen Drehzahlen, um die Ausbildung von Kohlenstoffablagerungen zu verhindern.

Aus der DE 31 33 223 A1 ist ein Verbrennungsmotor bekannt, bei dem Brennraumsowie Ansaugrohrwandungen, welche in Kontakt mit dem zu zündenden Kraftstoff-Luft-Gemisch bzw. Verbrennungsgasen kommen, mit einem derartigen Material beschichtet sind, dass sich an diesen beschichteten Wandungen im Betrieb der Brennkraftmaschine derart hohe Temperaturen einstellen, dass eine Bildung von Ablagerung verhindert ist. Gleichzeitig ist jedoch die Wärmekapazität derart niedrig gehalten, dass die beschichtete Wandung eine Temperatur von während der Ansaug- und Kompressionstakte ankommendem Kraftstoff-Luft-Gemisch nicht wesentlich erhöhen.

Der vorliegenden Erfindung liegt die Aufgabe zugrunde, eine Brennkraftmaschine der obengenannten Art sowie ein Verfahren zum Betreiben dieser dahingehend zu verbessern, dass eine übermäßige Verkokung von Bauteilen der Brennkraftmaschine, wie dem Einlassventil, verhindert ist.

Diese Aufgabe wird erfindungsgemäß durch eine Brennkraftmaschine der o.g. Art mit den in Anspruch 1 gekennzeichneten Merkmalen und durch ein Verfahren der o.g. Art mit den in Anspruch 11 gekennzeichneten Merkmalen gelöst. Vorteilhafte Ausgestaltungen der Erfindung sind in den abhängigen Ansprüchen angegeben.

Bei einer Brennkraftmaschine der o.g. Art ist es erfindungsgemäß vorgesehen, dass bei wenigstens einer Einlassventileinheit das Einlassventil mit wärmeableitenden Maßnahmen in Form eines Hohlschaftventils mit Na-K-Füllung ausgebildet ist, so dass ein Bereich des Last-Drehzahl-Kennfeldes mit Oberflächentemperaturen im Bereich der Kehlung des Einlassventils unter 180°C bzgl. dem entsprechenden Bereich des Last-Drehzahl-Kennfeldes ohne diese wärmeableitenden Maßnahmen derart vergrößert ist, dass im Betrieb der Brennkraftmaschine ein Aufbau von Verkokungsablagerungen am Einlassventil reduziert ist.

Dies hat den Vorteil, dass sich im Bereich einer Kehlung der Einlassventile in einem wesentlichen Bereich eines Last-Drehzahl-Kennfeldes der Brennkraftmaschine durch erhöhte Wärmeableitung niedrige Oberflächentemperaturen unter 180°C einstellen, wobei sich in überraschender Weise herausgestellt hat, dass bei derartigen Temperaturen ein Aufbau von Verkokungsschichten auf den Einlassventilen über einen Großteil des üblichen Betriebes der Brennkraftmaschine verhindert oder zumindest erheblich reduziert ist. Es werden erniedrigte Temperaturen an der Oberfläche der Einlassventile erzielt, da sich durch das Hohlventil mit Na-K-Füllung eine verbesserte Wärmeableitung zum Ventilsitz und zur Ventilschaftführung ergibt, wodurch eine geringere Wärmemenge im Einlassventil zurück bleibt.

Beispielsweise ist die Einlassventileinheit derart ausgebildet, dass sich im Bereich der Kehlung der Einlassventile in wenigstens einem Drittel des Lastkennfeldes der Brennkraftmaschine Oberflächentemperaturen von unter 180°C einstellen.

Eine hohe Wärmeableitung an einen umgebenden Zylinderkopf mit entsprechend sich erniedrigender Temperatur des Einlassventiles erzielt man dadurch, dass ein im Bereich des Einlassventilsitzes angeordneter Sitzring aus einem Werkstoff mit hoher Wärmeleitfähigkeit ausgebildet ist.

Erniedrigte Einlassventiltemperaturen erzielt man ferner dadurch, dass das Einlassventil der wenigstens einen Einlassventileinheit aus einem Werkstoff mit niedriger Wärmekapazität ausgebildet ist und/oder dass das Einlassventil der wenigstens einen Einlassventileinheit aus einem Werkstoff mit hoher oder auch niedriger Wärmeleitfähigkeit ausgebildet ist.

Einen geringeren Wärmeeintrag aus dem heißen Brennraum in das Einlassventil erzielt man dadurch, dass im Bereich eines Ventilbodens des Einlassventiles der wenigstens einen Einlassventileinheit eine wärmeisolierende Schicht, insbesondere eine Keramikschicht, ausgebildet ist.

Dadurch, dass das Einlassventil der wenigstens einen Einlassventileinheit eine Hülse aufweist, welche einen Teil des Schaftes, die Kehlung des Einlassventiles sowie wenigstens einen Teil einer dem Brennraum abgewandten Seite des Ventiltellers des Einlassventiles derart überdeckt, dass zwischen Einlassventil und Hülse ein Luftspalt ausgebildet ist, erzielt man aufgrund der Wärmeisolation des Luftspaltes zwischen Ventil und Hülse und dem damit verbundenen reduzierten Wärmeübergang vom Ventil zur Hülse nahezu in dem gesamten Last-Drehzahl-Kennfeld der Brennkraftmaschine eine besonders niedrige Oberflächentemperatur der dem Ansaugluftstrom ausgesetzten Hülsenoberfläche von maximal 165°C, so dass ein Aufbau einer Verkokungsschicht wirksam vermieden ist.

Dadurch, dass bei einer Brennkraftmaschine mit einer Einrichtung zur Abgasrückführung, welche zur Entnahme von Abgas mit dem Abgastrakt und zur Rückführung des Abgases mit einem Ansaugtrakt der Brennkraftmaschine verbunden ist, die Verbindung mit dem Abgastrakt hinter einem im Abgastrakt angeordneten Vorkatalysator ausgebildet ist, ergibt sich ein kühlerer Luftstrom im Ansaugtrakt der Brennkraftmaschine, da das eingeführte Abgas kühler ist. Hierdurch verringern sich die Temperaturen der Einlassventile entsprechend und der Lastkennfeldbereich mit niedrigen Einlassventiltemperaturen unterhalb 180°C wird vergrößert. Ferner hat der rückgeführte Abgasluftstrom eine andere Zusammensetzung, welche in überraschender Weise zu einem geringeren Aufbau von Verkokungsablagerungen führt. Eine weitere Abkühlung des Ansaugluftstromes erzielt man dadurch, dass die Einrichtung zur Abgasrückführung eine Einrichtung zum Kühlen des zurückgeführten Abgases aufweist.

Eine weitere Reduktion des Aufbaus von Verkokungsschichten am Einlassventil lässt sich dadurch erzielen, dass die Einrichtung zur Abgasrückführung einen Partikelfilter aufweist.

Bei einem Verfahren der o.g. Art ist es erfindungsgemäß vorgesehen, dass während des Betriebs der Brennkraftmaschine in dem Bereich des Last-Drehzahl-Kennfeldes mit Einlassventiltemperatur unter 180°C zusätzlich eine Temperatur des Kühlwassers gegenüber dem Betrieb außerhalb dieses Bereiches des Last-Drehzahl-Kennfeldes, beispielsweise um 10°C, erniedrigt wird.

Dies hat den Vorteil einer weiter verbesserten Vermeidung des Aufbaus einer Verkokungsschicht an den Einlassventilen sowie einer Vergrößerung des Bereiches des Last-Drehzahl-Kennfeldes mit Einlassventiltemperaturen unter 180°C.

Einen kühleren Luftstrom im Ansaugtrakt der Brennkraftmaschine erzielt man dadurch, dass ein rückzuführendes Abgas einem Abgastrakt stromab eines Vorkatalysators entnommen wird. Hierdurch verringern sich die Temperaturen der Einlassventile entsprechend und ein Lastkennfeldbereich mit niedrigen Einlassventiltemperaturen unterhalb 180°C wird vergrößert. Dies wird dadurch weiter verstärkt, dass ein rückzuführendes Abgas gekühlt wird.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in
- Fig. 1: eine bevorzugte Ausführungsform einer Brennkraftmaschine in schematischer Schnittansicht,
- Fig. 2: eine graphische Darstellung eines herkömmlichen Temperaturkennfeldes für ein Einlassventil,
- Fig. 3: eine graphische Darstellung eines Temperaturkennfeldes für ein Einlassventil mit einem vergrößerten Kennfeldbereich mit T < 180°,
- Fig. 4: eine graphische Darstellung eines Temperaturkennfeldes für ein Einlassventil mit einem Kennfeldbereich mit T > 380°,
- Fig. 5: eine bevorzugte Weiterbildung eines Einlassventils für möglichst niedrige Ventiltemperaturen in schematischer Schnittansicht,
- Fig. 5A: eine vorteilhafte Weiterbildung eines Ventilsitzringes für eine erfindungsgemäße Brennkraftmaschine in Aufsicht,
- Fig. 6: eine weitere bevorzugte Weiterbildung eines Einlaßventils für möglichst niedrige Ventiltemperaturen in schematischer Schnittansicht,
- Fig. 7: eine bevorzugte Weiterbildung eines Einlaßventils für möglichst hohe Ventiltemperaturen in schematischer Schnittansicht,
- Fig. 8: eine schematische Darstellung verschiedener, beispielhafter Ventilbeschichtungen,
- Fig. 9: eine erste bevorzugte Ausführungsform eines Trennbleches für den Einlasskanal in Aufsicht,
- Fig. 10: eine zweite bevorzugte Ausführungsform eines Trennbleches für den Einlasskanal in Aufsicht,
- Fig. 11: eine dritte bevorzugte Ausführungsform eines Trennbleches für den Einlasskanal in Aufsicht,
- Fig. 12: das Trennblech von Fig. 11 in Seitenansicht,
- Fig. 13: eine schematische perspektivische Veranschaulichung der Strömungsumleitung mittels des Trennbleches von Fig. 11 und 12,
- Fig. 14A: eine bevorzugte Ausführungsform einer Abstreifeinrichtung mit Ventildreheinrichtung in schematischer Schnittansicht,
- Fig. 14B: eine bevorzugte Ausführungsform eines Trennbleches, welches als Abstreifer ausgebildet ist, in schematischer Schnittansicht,
- Fig. 14C: eine Detailansicht des Bereiches A von Fig. 14B in einem schematischen Querschnitt,
- Fig. 14D: eine alternative Ausführungsform einer Abstreifeinrichtung in schematischer Schnittansicht,
- Fig. 14E: eine Veranschaulichung der Ventildrehung mit Verkokungen im Bereich des Sitzringes,
- Fig. 14F: eine weitere bevorzugte Ausführungsform einer Abstreifeinrichtung in Aufsicht,
- Fig. 14G: die Abstreifeinrichtung von Fig. 14F in schematischer Schnittansicht,
- Fig. 14H: eine Alternative Ausführungsform der Abstreifeinrichtung von Fig. 14F und 14G in schematischer Schnittansicht,
- Fig. 15: eine bevorzugte Ausführungsform einer Einspritzvorrichtung mit Ventilspülung in schematischer Schnittansicht,
- Fig. 16: eine Detailansicht der Ventilspülung von Fig. 15 mit Einlaßventil in offener und geschlossener Stellung,
- Fig. 17: eine tabellarische Aufstellung eines Versuchsergebnisses,
- Fig. 18: eine schematische Darstellung eines Last-Drehzahl-Kennfeldes für einen Ottomotor mit Direkteinspritzung und
- Fig. 19: eine schematische Schnittansicht einer bevorzugten Ausführungsform einer erfindungsgemäßen Ventilschaftabdichtung.

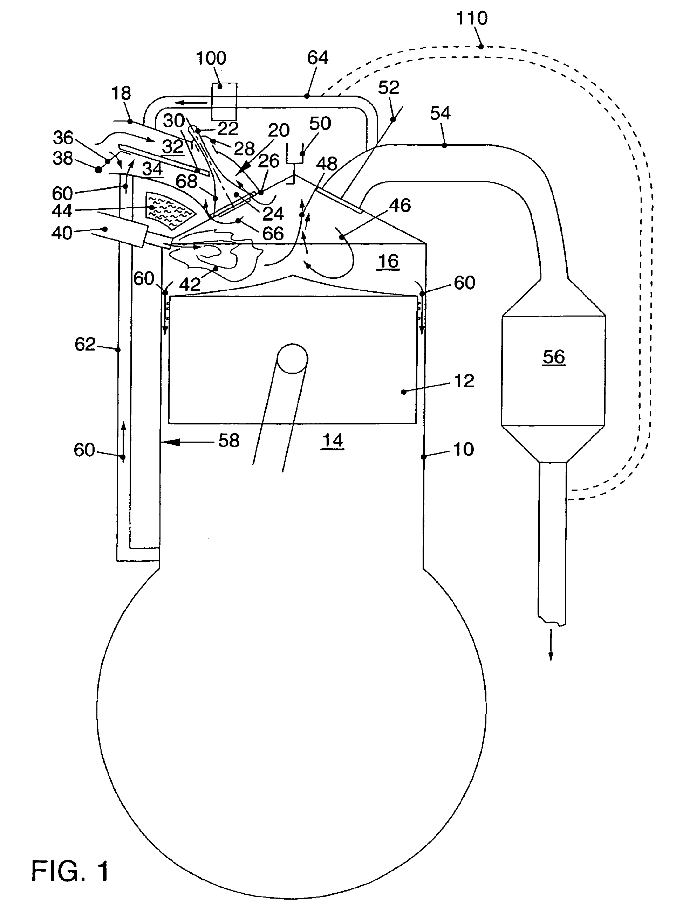

Die in Fig. 1 schematisch dargestellte Brennkraftmaschine in Form eines Ottomotors von Kraftstoff umfaßt ein Kurbelgehäuse 10 in dem sich ein Kolben 12 in einem Arbeitszylinder 14 auf und ab bewegt, wobei durch einen thermodynamischen Kreisprozeß in bekannter Weise Arbeit geleistet und die Oszillationsbewegung des Kolbens 12 auf eine nicht dargestellte Kurbelwelle als Drehbewegung übertragen wird. Der Kolben trennt einen Brennraum 16 ab. Dem Brennraum 16 wird über einen Ansaugkanal 18 Frischluft zugeführt. Ein Einlaßventil 20 öffnet oder schließt wahlweise eine Verbindung zwischen dem Brennraum 16 und dem Ansaugkanal 18. Das Einlaßventil 20 umfaßt einen Ventilschaft 22 und einen Ventilteller 24. Letzterer liegt im geschlossenen Zustand dichtend an einem Sitzring 26 an. Ferner wird das Einlaßventil 20 von einer Ventilschaftführung 28 geführt. Die Kombination aus Einlaßventil 20, Einlaßventilsitz 26, Ventilschaftführung 28 sowie ggf. weiterer Bauteile im Bereich des Einlaßventils 20, welche funktional zum Einlaßventil 20 gehören, wird hierin als Einlaßventileinheit bezeichnet. Eine in Fig. 1 nicht dargestellte Nockenwelle betätigt über einen entsprechenden Nocken das Einlaßventil 20. Der Einlaß- oder Ansaugkanal 18 wird von einem Trennblech 30 in einen oberen Kanal 32 und einen unteren Kanal 34 unterteilt. Es ist ferner eine Ladungsbewegungsklappe 36 vorgesehen, welche um eine Achse 38 in einen geschlossenen und in einen offenen Zustand verschwenkbar ist. Im geschlossenen Zustand (wie dargestellt) verschließt die Ladungsbewegungsklappe 36 den unteren Kanal 34. Eine Einspritzvorrichtung 40 für Kraftstoff 42 ist derart angeordnet, daß diese den Kraftstoff 42 direkt in den Brennraum 16 einspritzt. Es handelt sich somit bei der dargestellten Brennkraftmaschine um einen Ottomotor mit Direkteinspritzung. Benachbart zum Einlaßventil 20 und der Einspritzvorrichtung 40 ist im Zylinderkopf ein Kühlwasserkanal 44 zum Abführen von Wärme ausgebildet. Der Einlaßkanal 18 mit dem Trennblech 30 und dem Einlaßventil 20 ist derart ausgebildet, daß sich beim Einströmen von Luft aus dem Einlaßkanal 20 in den Brennraum 16 eine Tumbleströmung einstellt, wie mit Pfeil 46 angedeutet. Zusammen mit der Einspritzrichtung des Kraftstoffes 42 (Pfeil 48) wird in einem Verdichtungstakt ein zündfähiges Kraftstoff-Luftgemisch zu einer Zündkerze 50 transportiert. Diese zündet das Kraftstoff-Luftgemisch und es wird über den Kolben 12 Arbeit geleistet. Anschließend wird entsprechend entstandenes Abgas über ein Auslaßventil 52, einen Abgaskanal 54 und einen Vorkatalysator 56 abgeleitet. Die Ladungsbewegungsklappe 36 verschließt bei normalem Betrieb der Brennkraftmaschine den unteren Kanal 34 bei niedrigen Drehzahlen, um eine ausreichende Tumbleströmung 46 sicher zu stellen.

Durch unvermeidliche Undichtigkeiten zwischen Kolben 12 und einer Wandung 58 des Arbeitszylinders 14 strömt während des Betriebs der Brennkraftmaschine Gas 60 aus dem Brennraum 16 am Kolben 12 vorbei in das Zylinderkurbelgehäuse 10. Um dieses sogen. Blow-By-Gas 60 abzuleiten, ist eine Kurbelgehäuseentlüftung 62 vorgesehen, welche das Blow-By-Gas 60 über den Ansaugkanal 18 erneut der Verbrennung zuführt. Wegen der Kohlenwasserstoffbelastung des Blow-By-Gases 60 darf dieses nicht direkt an die Umgebung abgegeben werden.

Zur Verringerung von Schadstoffemissionen der Brennkraftmaschine mit dem Abgas ist ferner eine Einrichtung 64 zur externen Abgasrückführung (EAGR) vorgesehen. Diese entnimmt dem Abgaskanal 54 Abgas und führt dieses dem Einlaßkanal 18 zu. Zusätzlich ist eine sogen. innere Abgasrückführung dadurch realisiert, daß noch während eines Ausstoßtaktes das Auslaßventil 52 schließt und das Einlaßventil 20 öffnet, so daß ein Teil das Abgases aus dem letzten Arbeitstakt nicht in den Abgaskanal 54 sondern in den Ansaugkanal 18 ausgeschoben (Pfeil 66) und mit dem nächsten Ansaugtakt wieder in den Brennraum 16 gesogen wird.

Das Einlaßventil 20 steht also nicht nur mit gefilterter sauberer Frischluft in Berührung, sondern kommt auch mit den Blow-By-Gasen 60, dem Abgas aus innerer und externer Abgasrückführung sowie mit Öl, welches am Ventilschaft 22 herab läuft, in Kontakt. Dementsprechend besteht die Gefahr, daß sich Verkokungsablagerungen insbesondere im Bereich einer Kehlung bzw. Tulpe 68 des Einlaßventiles 20 bilden. Da es sich um einen direkteinspritzenden Motor handelt, entfällt der bei in den Ansaugkanal einspritzenden herkömmlichen Ottomotoren vorhandene Reinigungseffekt aufgrund von Kraftstoff, welcher das Einlaßventil 20 benetzt. Die Erfindung wirkt diesen Verkokungsablagerungen entgegen, indem bereits die Ablagerung an sich verhindert wird oder sich bildende Ablagerungen abgebaut werden.

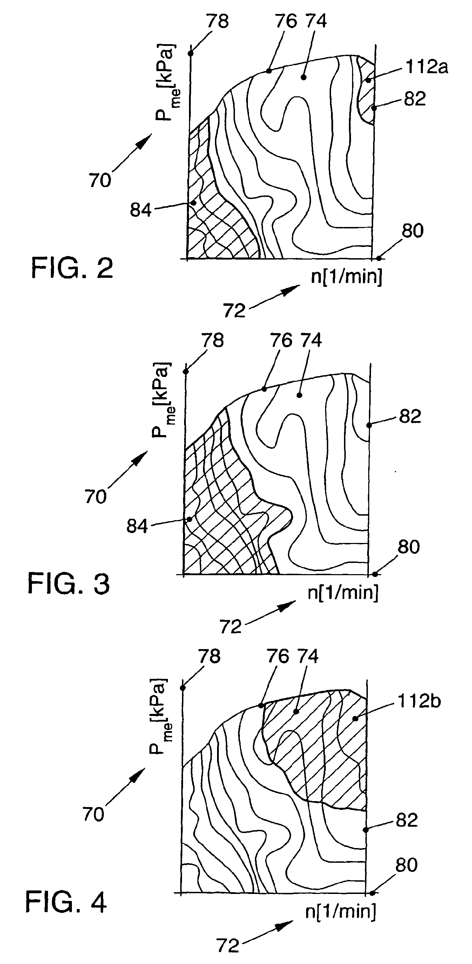

Die Brennkraftmaschine wird in einem sogen. Last-Drehzahl-Kennfeld betrieben, wie in Fig. 2 dargestellt. Hierbei ist eine Last 70 (Pme [kPa]) über einer Drehzahl 72 (n [1/min]) aufgetragen. Die Fläche 74, welche die Lastkurve 76 mit den Achsen 78, 80 des Koordinatensystems einschließt bildet das Kennfeld und kann verschiedene Parameter beinhalten. In der Darstellung von Fig. 2 ist dieser eine Temperatur 82 für das Einlaßventil 20. In einem relativ kleinen, schraffierten Kennfeldbereich 84 liegt die Einlaßventiltemperatur unter 180°C oder aber in einem anderen Kennfeldbereich 112a über 380°C.

Um einen Aufbau von Verkokungsschichten auf den Einlaßventilen über einen Großteil des üblichen Betriebes der Brennkraftmaschine im wesentlichen zu verhindern, sind die Einlaßventile, der Sitzring 26 des Einlaßventilsitzes und/oder die Ventilschaftführung 28 derart ausgebildet, daß sich wenigstens im Bereich der Kehlung 68 der Einlaßventile 20 in einem wesentlichen Bereich des Lastkennfeldes 74 der Brennkraftmaschine niedrige Oberflächentemperaturen 82 unter 180°C einstellen. Dies ist in Fig. 3 veranschaulicht. Durch entsprechende Maßnahmen an den Einlaßventilen 20 bzw. an der Ventilschaftführung 28 ist der schraffierte Kennfeldbereich 84 mit Einlaßventiltemperaturen unter 180°C deutlich vergrößert. Mit anderen Worten ist wenigstens eine Einlaßventileinheit mit derartigen wärmeableitenden Maßnahmen ausgebildet, daß der Bereich des Last-Drehzahl-Kennfeldes mit Oberflächentemperaturen im Bereich der Kehlung des Einlaßventils unter 180°C bzgl. dem entsprechenden Bereich des Last-Drehzahl-Kennfeldes ohne diese wärmeableitenden Maßnahmen derart vergrößert ist, daß im Betrieb der Brennkraftmaschine ein Aufbau von Verkokungsablagerungen am Einlaßventil reduziert ist. Es hat sich in überraschender Weise gezeigt, daß sich bei Temperaturen unter 180°C keine wesentlichen Verkokungsablagerungen an den Einlaßventilen 20 bilden. Ein wesentlicher Teil des Kennfeldes 76 ist somit ein Bereich 84, in dem sich keine Ablagerungen aufbauen. Dieser Kennfeldbereich 84 befindet sich beispielsweise bei Drehzahlen bis 4.000 U/min und reicht dort im wesentlich bis zur Vollast. Im üblichen Fahrbetrieb eines Kraftfahrzeuges wird die Brennkraftmaschine zum überwiegend Teil der Betriebszeit in diesem Kennfeldbereich Betrieben. Daher befindet sich die Brennkraftmaschine in einem überwiegenden Teil ihrer Betriebszeit in einem Betriebszustand, in dem sich keine oder nur geringe Verkokungsablagerungen an den Einlaßventilen ausbilden. Beispielsweise ist die Einlaßventileinheit derart ausgebildet, daß sich im Bereich der Kehlung der Einlaßventile in wenigstens einem Drittel des Lastkennfeldes der Brennkraftmaschine Oberflächentemperaturen von unter 180°C einstellen.

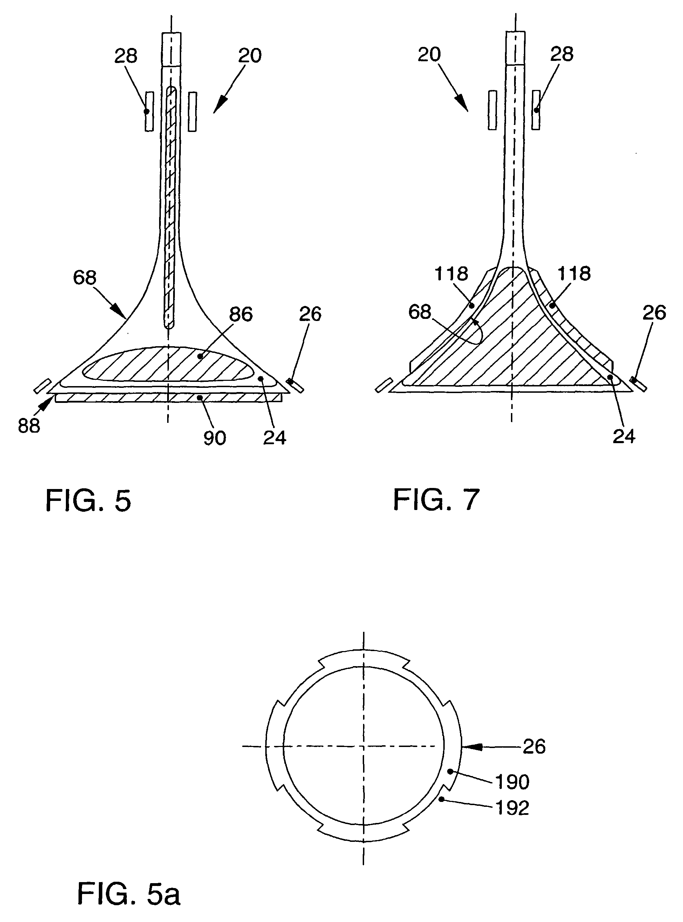

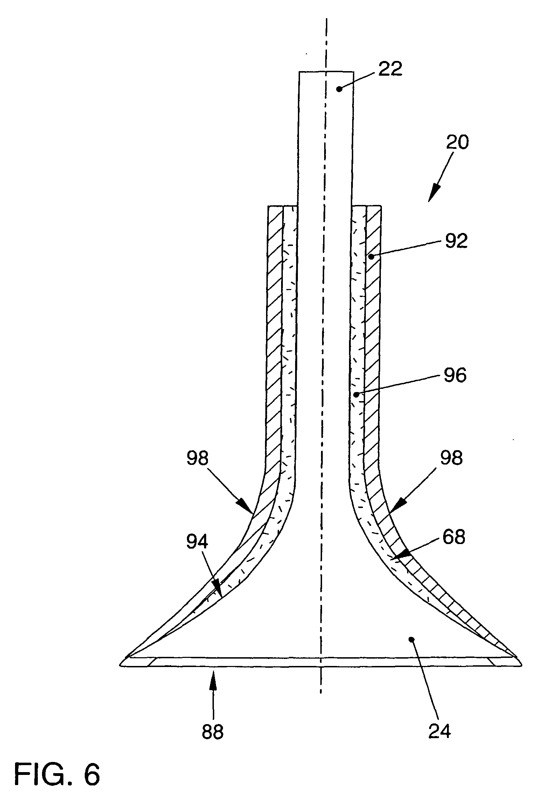

Ein derartiger Kennfeldverlauf wird mit folgenden Maßnahmen einzeln oder in Kombination miteinander erreicht: Eine hohe Wärmeableitung an einen umgebenden Zylinderkopf mit entsprechend sich erniedrigender Temperatur der Einlaßventile 20 erzielt man dadurch, daß der Sitzring 26 aus einem Werkstoff mit hoher Wärmeleitfähigkeit ausgebildet ist. Weiter erniedrigte Einlaßventiltemperaturen erzielt man dadurch, daß die Einlaßventile 20 aus einem Werkstoff mit niedriger Wärmekapazität und/oder aus einem Werkstoff mit niedriger oder hoher Wärmeleitfähigkeit ausgebildet sind. Erniedrigte Temperaturen an der Oberfläche der Einlaßventile 20 erzielt man ferner dadurch, daß die Einlaßventile 20 als Hohlventile mit Na-K-Füllung 86 ausgebildet sind, wie in Fig. 5 dargestellt, da sich eine verbesserte Wärmeableitung zum Sitzring 26 und zur Ventilschaftführung 28 ergibt, wodurch eine geringere Wärmemenge im Einlaßventil 20 zurück bleibt. Mit anderen Worten senkt eine verbesserte Kühlung die Temperatur des Einlaßventils 20 insgesamt und besonders auch an der Oberfläche im Bereich der Kehlung 68, wo die größte Gefahr für Verkokungsablagerungen besteht. Einen geringeren Wärmeeintrag aus dem heißen Brennraum in die Einlaßventile 20 erzielt man dadurch, daß im Bereich eines Ventilbodens 88 des Einlaßventiles 20 eine wärmeisolierende Schicht, insbesondere eine Keramikschicht 90, ausgebildet ist. Wenigstes ein Einlaßventil 20 weist zur weiteren Temperaturerniedrigung eine Hülse 92 auf, wie in Fig. 6 dargestellt, welche einen Teil des Schaftes 22, die Kehlung 68 sowie wenigstens einen Teil einer dem Brennraum 16 abgewandten Seite 94 des Ventiltellers 24 des Einlaßventiles 20 überdeckt. Dabei ist zwischen Einlaßventil 20 und Hülse 92 ein Luftspalt 96 ausgebildet, welcher eine Wärmeisolation zwischen Ventil 20 und Hülse 92 bildet. Dies bedingt einen reduzierten Wärmeübergang vom Ventil 20 zur Hülse 92 nahezu in dem gesamten Lastkennfeld der Brennkraftmaschine mit einer entsprechend niedrigen Oberflächentemperatur der dem Ansaugluftstrom ausgesetzten Hülsenoberfläche 98 von maximal 165°C, so daß ein Aufbau einer Verkokungsschicht wirksam vermieden ist.

Die aus Fig. 1 ersichtliche Einrichtung 64 zur externen Abgasrückführung ist bevorzugt mit dem Abgastrakt 54 hinter bzw. stromab des Vorkatalysators 56 verbunden, wie durch gestrichelte Linien 110 angedeutet. Hierdurch resultiert ein kühlerer Luftstrom im Ansaugtrakt 18 der Brennkraftmaschine, da das rückgeführte Abgas kühler ist. Hierdurch verringert sich dementsprechend die Temperatur der Einlaßventile 20 und der Bereich des Last-Drehzahl-Kennfeldes mit niedrigen Einlaßventiltemperaturen unterhalb 180°C wird weiter vergrößert. Zusätzlich ist das Abgas vorgereinigt, so daß sich weniger ablagerungsfähige Anteile, insbesondere Kohlenwasserstoffe, im Abgas befinden. Ferner hat der rückgeführte Abgasluftstrom eine andere Zusammensetzung, welche in überraschender Weise zu einem geringeren Aufbau von Verkokungsablagerungen führt.

Eine weitere Abkühlung des Ansaugluftstromes im Ansaugkanal 18 erzielt man dadurch, daß die Einrichtung 64 zur Abgasrückführung eine nicht dargestellte Einrichtung zum Kühlen des zurückgeführten Abgases aufweist. Um die ablagerungsfähigen Anteile im Abgas, welche ggf. zum Aufbau einer Verkokungsschicht beitragen, weiter zu reduzieren, umfaßt die Einrichtung 64 zur Abgasrückführung zusätzlich einen Partikelfilter 100. Desweiteren ist es vorteilhaft, in solchen Betriebssituation, in denen die Verkokungsablagerungen verstärkt auftreten, eine Einlaßnockenwelle nach "spät" zu verstellen. Dadurch wird die Ventilüberschneidung der Ein- und Auslaßventile 20 bzw. 52 um Ausschubtakt verringert, wodurch die innere Abgasrückführung entsprechend reduziert wird.

Zur weiteren Vermeidung des Aufbaus einer Verkokungsschicht an den Einlaßventilen durch erniedrigte Temperatur dieser sowie zur weiteren Vergrößerung des Bereiches des Last-Drehzahl-Kennfeldes mit Einlaßventiltemperaturen unter 180°C wird während des Betriebs der Brennkraftmaschine in dem Bereich des Last-Drehzahl-Kennfeldes mit Einlaßventiltemperatur unter 180°C zusätzlich eine Temperatur des Kühlwassers gegenüber dem Betrieb außerhalb dieses Bereiches des Last-Drehzahl-Kennfeldes, beispielsweise um 10°C, erniedrigt.

Ein weiterer Ansatz zur Reduktion der Verkokung der Einlaßventile 20 liegt darin, die Einlaßventiltemperatur wenigstens temporär zu erhöhen, da es sich in überraschender Weise heraus gestellt hat, daß oberhalb von 380°C etwaige Verkokungsablagerungen abgebaut werden. Hierzu ist die Einlaßventileinheit, welche u.a. die Einlaßventile 20 und die Ventilschaftführung 28 umfaßt, derart mit die Wärmeableitung behindernden Maßnahmen ausgebildet, daß sich wenigstens im Bereich der Kehlung 68 der Einlaßventile 20 in wenigstens einem vorbestimmten Bereich des Lastkennfeldes 74 der Brennkraftmaschine erhöhte Oberflächentemperaturen über 380°C einstellen. Dies ist in Fig. 4 veranschaulicht. In dem schraffierten Kennfeldbereich 112b liegt die Einlaßventiltemperatur über 380°C. Bei diesen Temperaturen bauen sich Verkokungsablagerungen an den Einlaßventilen 20 ab. Dieser Kennfeldbereich 84 befindet sich hier beispielhaft bei Drehzahlen über 3.000 U/min und reicht dort im wesentlich bis zur Vollast. Selbst wenn im normalen Fahrbetrieb eines Kraftfahrzeuges die Brennkraftmaschine zeitlich nicht hauptsächlich in dem Bereich 112 betrieben wird, so kann sich trotzdem keine den Betrieb der Brennkraftmaschine beeinträchtigende Verkokungsablagerung aufbauen, da der Abbau in dem schraffierten Kennfeldbereich 112b sehr rasch erfolgt. So genügt beispielsweise ein Betrieb der Brennkraftmaschine in diesem Kennfeldbereich 112b für eine Zeitspanne von beispielsweise 20 min, um selbst eine dicke Verkokungsablagerung abzubauen. Mit anderen Worten reinigt beispielsweise eine regelmäßige Autobahnfahrt ausreichend die Einlaßventile 20. Zusätzlich kann dieser Kennfeldbereich im Zuge einer Wartung oder Reparatur der Brennkraftmaschine in einer Werkstatt angefahren werden.

Der in Fig. 4 veranschaulichte Kennfeldverlauf wird mit folgenden Maßnahmen einzeln oder in Kombination miteinander erreicht: Eine niedrige Wärmeableitung an den umgebenden Zylinderkopf mit entsprechend höherer Temperatur der Einlaßventile 20 erzielt man dadurch, daß der Sitzring 26 aus einem Werkstoff mit niedriger Wärmeleitfähigkeit, insbesondere aus einem Werkstoff mit hohem Eisengehalt, ausgebildet ist. Weiter erhöhte Einlaßventiltemperaturen erzielt man dadurch, daß die Einlaßventile 20 aus einem Werkstoff mit hoher Wärmekapazität, insbesondere als Nimonic-Ventile oder einem ähnlichen Werkstoff, und/oder aus einem Werkstoff mit hoher Wärmeleitfähigkeit ausgebildet sind.

Sofern die Brennkraftmaschine im Zuge von Wartungs- oder Reparaturarbeiten temporär im Kennfeldbereich 112 (Fig. 4) mit T > 380°C betrieben wird, beträgt die vorbestimmte Zeitspanne zweckmäßigerweise 5 min bis 60 min, insbesondere 30 min. Eine weitere Verstärkung des Abbaus des Verkokungsbelages an den Einlaßventilen sowie eine Vergrößerung des Bereiches des Last-Drehzahl-Kennfeldes mit Einlaßventiltemperaturen über 380°C erzielt man dadurch, daß während des Betriebs der Brennkraftmaschine in diesem Bereich des Last-Drehzahl-Kennfeldes mit Einlaßventiltemperatur über 380°C zusätzlich eine Temperatur des Kühlwassers gegenüber dem Betrieb außerhalb dieses Bereiches des Last-Drehzahl-Kennfeldes, beispielsweise um 10°C, erhöht wird. Zum verstärkten Abbauen von Verkokungsablagerungen wird während des Betriebs der Brennkraftmaschine im Kennfeldbereich 112 ein Verkokungsablagerungen lösendes Mittel in den Ansaugkanal 18 eingespritzt.

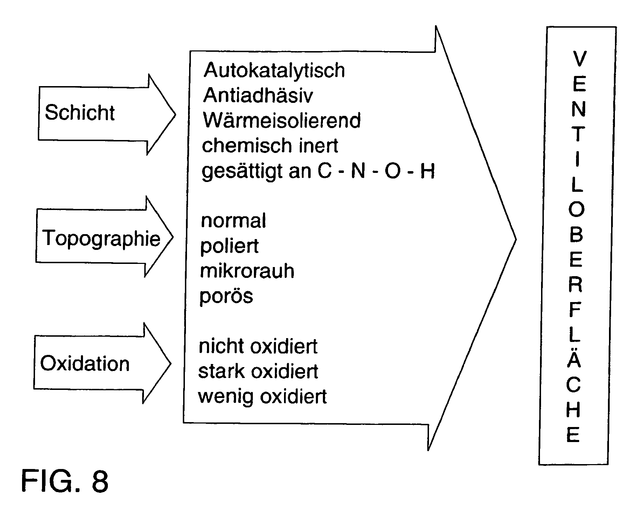

Eine weitere Erhöhung der Temperaturen an der Oberfläche der Einlaßventile 20 erzielt man ferner dadurch, daß, wie in Fig. 7 dargestellt, die Einlaßventile 20 mit einem zum Brennraum hin offenen Hohlkopf mit minimierter Wandstärke ausgebildet sind, wodurch eine höhere Wärmemenge an die Einlaßventilkehlung 68 geführt wird. Einen geringeren Wärmeabtransport durch im Ansaugtakt am Einlaßventil 20 vorbei strömende Luft der Brennkraftmaschine erzielt man dadurch, daß im Bereich der Kehlung 68 der Einlaßventile 20 eine wärmeisolierende Schicht 118, insbesondere eine Keramikschicht, oder daß ein Ventilkopf 24 der Einlaßventile 20 flach ausgebildet ist.

Fig. 5A veranschaulicht eine beispielhafte Ausführungsform eines Sitzringes 26, welcher im Bereich des Einlaßventilsitzes der wenigstens einen Einlaßventileinheit angeordneter ist. Dieser Sitzring 26 weist an seiner dem Zylinderkopf zugewandten Seite eine Fläche 190 auf, die eine Kontaktfläche mit entsprechendem Wärmeübergang vom Sitzring 26 zum Zylinderkopf darstellt. Am Umfang des Sitzringes 26 sind Ausnehmungen 192 ausgebildet. welche abschnittsweise diese Kontaktfläche reduzieren. Im Bereich der Ausnehmungen 192 ist somit eine kleinere Kontaktfläche 190 vorhanden, als an denjenigen Umfangsabschnitten der Kontaktfläche 190 des Sitzringes 26 ohne Ausnehmung 192. Dies führt zu einem entsprechend reduzierten Wärmeübergang vom Sitzring 26 zum Zylinderkopf, so daß das diesem Sitzring 26 zugeordnete Einlaßventil 20 eine höhere Wärmemenge enthält und damit eine höhere Temperatur aufweist, als ein Einlaßventil 20 mit herkömmlichem Sitzring 26 ohne Ausnehmungen 192.

Zur Unterstützung des Abbaus von am Einlaßventil bereits vorhandenen Verkokungsablagerungen erhält das Motoröl wenigstens ein Verkokungen lösendes Additiv, wobei damit das Motoröl als Träger für den bzw. die Verkokungslöser dient. Dies ist ein Zusatznutzen des Motoröls, welches bisher nur als Schmiermittel dient und allenfalls Additive als Verschleißschutz enthält. Um eine ausreichende Menge Motoröl mit Verkokungen lösenden Additiven an den Ort der Verkokungsablagerungen zu bringen, d.h. an die Kehlung 68 und die Oberseite 94 des Ventiltellers 24 der Einlaßventile 20, ist es vorgesehen, daß eine Ventilschaftabdichtung im Bereich der Ventilschaftführung 28 der Einlaßventile 20 für Motoröl besonders durchlässig ausgebildet ist. Dies verstärkt ein Herunterlaufen von Motoröl aus dem Zylinderkopf entlang des Ventilschaftes 22 zur Kehlung 68 und zum Ventilkopf 24, so daß die dem Motoröl hinzugefügten Verkokungslöser entsprechend wirken können. Eine mit diesem additivierten Motoröl betriebene Brennkraftmaschine weist bevorzugt folgende Merkmale auf: Eine Ventilschaftabdichtung der Einlaßventile 20 ist derart ausgebildet, daß diese eine Öldurchlässigkeit von größer 0,002 g/h aufweist. In besonders vorteilhafter Weise sind Kolbenringpakete von Kolben der Brennkraftmaschine derart ausgebildet, daß eine Menge von in den Brennraum zurück geführtem Öl größer 1,5 g/h pro Zylinder bei Nenndrehzahl ist, und/oder ist ein Ölabscheider einer Kurbelgehäuseentlüftung derart ausgebildet, daß dieser eine Öldurchlässigkeit von größer 1 g/h aufweist. Alle diese Maßnahmen führen dazu, daß verstärkt Motoröl mit dem Verkokungslöser zu den Einlaßventilen transportiert wird.

Ein weiterer Ansatz gegen betriebsbeeinträchtigende Verkokungsablagerungen der Einlaßventile 20 betrifft eine spezielle Oberflächenbeschaffenheit bzw. Beschichtung wenigstens im Bereich der Kehlung 68 der Einlaßventile 20 bzw. der gesamten Oberfläche der Einlaßventile 20, wobei die Oberfläche bzw. die Beschichtung wärmeisolierend, antiadhäsiv, chemisch inert oder katalytisch ausgebildet ist. Isolierende, antiadhäsive und chemisch inerte Oberflächen bzw. Beschichtungen sollen dabei bereits den Aufbau einer Verkokungsablagerung verhindern oder zumindest bremsen, während katalytische Oberflächen bzw. Beschichtungen Verkokungsablagerungen wieder abbauen. Hierbei ist es vorteilhaft, daß die Brennkraftmaschine und die katalytische Oberfläche bzw. Beschichtung derart aufeinander abgestimmt sind, daß nicht solche Betriebsbedingungen überwiegen, in denen sich die Verkokungsablagerungen schneller aufbauen als sie von der katalytischen Oberfläche bzw. Schicht abgebaut werden. Mit anderen Worten soll die Brennkraftmaschine in ihrer überwiegenden Betriebszeit unter solchen Bedingungen laufen, in denen die katalytische Oberfläche bzw. Schicht die Verkokungsablagerungen schneller abbaut als sich diese aufbauen. Einen den Wirkmechanismus der speziellen Oberfläche bzw. Beschichtung der Einlaßventile unterstützenden Effekt erzielt man zusätzlich durch spezielle Oberflächentopografien, welche zumindest in solchen Bereichen der Oberfläche des Einlaßventiles 20 ausgebildet sind, welche besonders für Verkokungsablagerungen anfällig sind, beispielsweise im Bereich der Kehlung 68. Eine polierte Oberfläche unterstützt dabei besonders die Verhinderung des Aufbaus von Verkokungsablagerungen. Eine mikrorauhe Oberflächenstruktur dagegen weist eine große Fläche auf und unterstützt dementsprechend eine katalytische Oberfläche bzw. Beschichtung in ihrer Wirkung. Auch ein spezieller Oxidationszustand der Beschichtung bzw. der Oberfläche des Einlaßventils ist ggf. vorteilhaft. Fig. 8 veranschaulicht schematisch verschiedene Beschichtungen mit deren entsprechendem Effekt.

Die Oberfläche ist beispielsweise als eine wärmeisolierende Beschichtung, insbesondere eine Keramik, beispielsweise ZrO₂, insbesondere mit einer Schichtdicke von 80µm, ausgebildet. Einen geringeren Wärmeabtransport durch am Einlaßventil vorbei strömende Luft im Ansaugtakt der Brennkraftmaschine erzielt man dadurch, daß die wärmeisolierende Beschichtung im Bereich der Kehlung der Einlaßventile ausgebildet ist. Die hierdurch sich ergebenden höheren Oberflächentemperaturen am Einlaßventil bauen eine sich ggf. aufgebaute Verkokungsablagerung bereits im Betrieb der Brennkraftmaschine ab. Einen geringeren Wärmeeintrag aus dem heißen Brennraum in die Einlaßventile erzielt man dadurch, daß die wärmeisolierende Beschichtung im Bereich eines Ventilbodens der Einlaßventile ausgebildet ist. Die hierdurch sich ergebenden niedrigeren Oberflächentemperaturen am Einlaßventil wirken einem Aufbau von Verkokungsablagerungen entgegen. Eine Prävention gegen Verkokungsablagerungen erzielt man dadurch, daß die Oberfläche mikroporös oder antiadhäsiv ausgebildet ist und beispielsweise Cr-C-N, insbesondere in einer Schichtdicke von 5µm, umfaßt. Der Wirkmechanismus umfaßt dabei eine entsprechende Oberflächenspannung, die Verkokungsablagerungen entgegen wirkt. Zum Verhindern der Anlagerung von Verkokungsablagerungen ist die Oberfläche chemisch inert bzgl. vorbestimmter Elemente, insbesondere bzgl. C, H, O und/oder N, ausgebildet und umfaßt beispielsweise TiZr-C-H-N-O oder TiAl-C-H-N-O, beispielsweise in einer Schichtdicke von 5µm. Der Wirkmechanismus umfaßt hier eine Sättigung der Oberfläche für bestimmte Elemente, die sich dann nicht ablagern. Zum Abbau von Verkokungsablagerungen ist die Oberfläche katalytisch oder autokatalytisch ausgebildet und umfaßt beispielsweise Pt oder Vanadiumnitrid (VN). In besonders vorteilhafter Weise ist eine oxidierte Schicht, wie beispielsweise Vanadiumpentoxid, vorgesehen. Eine besonders gute katalytische Wirkung wegen einer großen Oberfläche erzielt man dadurch, daß die Oberfläche mikrorauh ausgebildet ist.

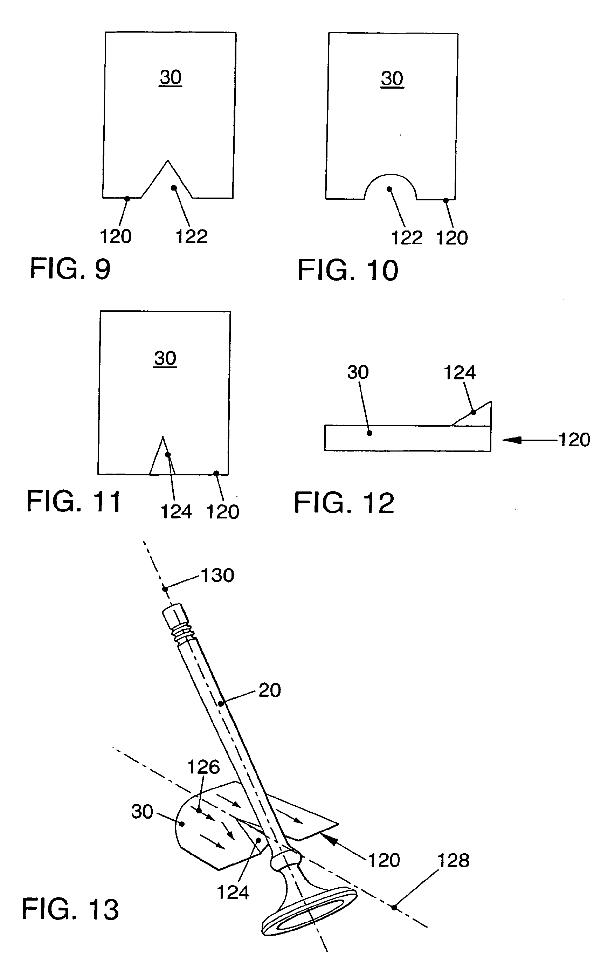

Eine weitere Maßnahme zum Verhindern des Aufbaus insbesondere einer knollenförmigen Verkokungsablagerung am Ventilschaft 22 des Einlaßventils 20 stromab des Trennbleches 30 betrifft eine Strömungsumleitung des vom Trennblech 30 auf den Ventilschaft 22 treffenden Fluidstromes im Einlaßkanal 18. Hierzu ist das Trennblech 30 an einem dem Einlaßventil 20 zugewandten Ende derart ausgebildet, daß eine Fluidströmung im Einlaßkanal 18 an dem Ventilschaft 22 des Einlaßventiles 20 vorbei geführt ist. Ein Abtropfen bzw. Ablagern von in der Fluidströmung befindlichen Partikeln bzw. Flüssigkeiten am Ventilschaft 22 ist dadurch wirksam verhindert, so daß sich am Ventilschaft 22 keine Verkokungsablagerung aufbaut. Verschiedene Ausführungsformen für das Trennblech 30 sind in den Fig. 9 bis 12 dargestellt. An dem dem Einlaßventil 20 zugewandten Ende 120 des Trennbleches 30 ist beispielsweise eine dreieckige (Fig. 9) oder halbkreisförmige (Fig. 10) Ausnehmung 122 ausgebildet. Etwaige auf dem Blech vorhandene Flüssigkeitstropfen bewegen sich unter dem Einfluß der Strömung im Ansaugkanal 18 zunächst entlang der Kanten der Ausnehmung 122, bevor sich diese Tropfen vom Trennblech 30 lösen. Dadurch fliegen diese dann von der Strömung mitgerissenen Tropfen am Ventilschaft 22 vorbei, ohne mit diesem in Kontakt zu kommen. Alternativ ist an diesem Ende 120 des Trennbleches 30 eine keilförmige Stanzung 124 angeordnet, welche eine die Strömung im Einlaßkanal 18 entsprechend umleitende Erhebung ausbildet, wie aus Fig. 11 und 12 ersichtlich. Fig. 13 veranschaulicht die Umlenkung der Strömung 126 durch die Ausgestaltung des Trennbleches 30. Neben der Vermeidung von unerwünschten Verwirbelungen der Strömung im Einlaßkanal 18 stromab des Trennbleches 30 ergeben die vorgenannten Ausgestaltungen des Trennbleches 30 zusätzlich eine positive Luftführung, die die Stabilität des Brennverfahrens des direkteinspritzenden Ottomotors verbessert. Es resultiert durch eine Umlenkung der Ansaugluft um das Einlaßventil 20 eine höhere Tumble-Intensität bei gleichem Durchfluß.

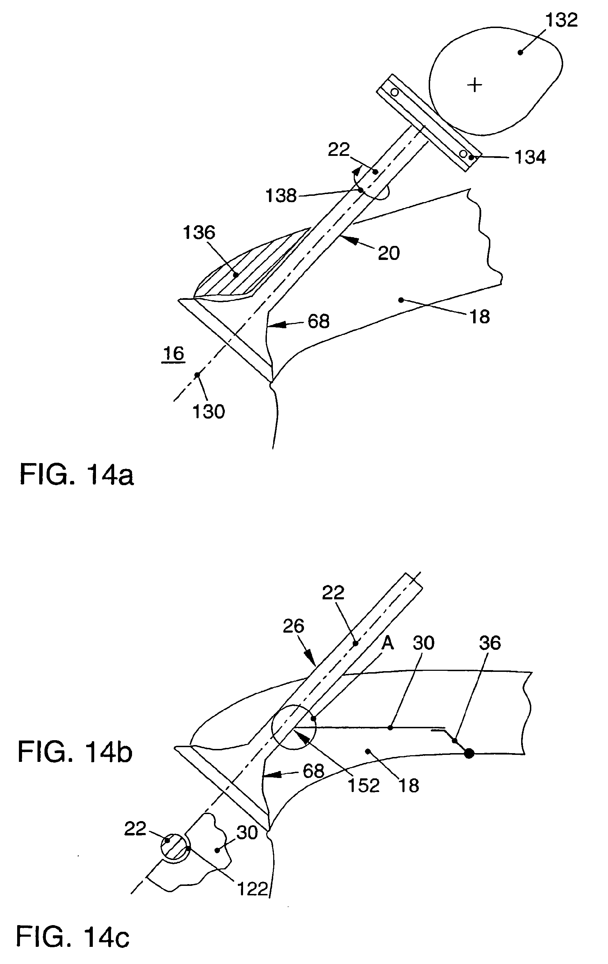

Das Trennblech 30 weist somit an dem dem Einlaßventil 20 zugewandten Ende 120 eine Ausnehmung 122 oder Ausstanzung 124 auf, welche entgegen der Strömungsrichtung stromauf des Ventilschaftes 22 auf einer parallel zur Fluidströmung 126 verlaufenden Linie 128 angeordnet ist, welche eine Mittelachse 130 des Ventilschaftes 22 schneidet. Hierdurch werden sich am Trennblech 30 abscheidende Flüssigkeiten (Ölkondensat) entlang des Randes dieser Ausnehmung 122 bzw. Ausstanzung 124 geleitet und fliegen nach dem Ablösen vom Trennblech 30 am Ventilschaft 22 vorbei. Das Trennblech 30 gemäß Fig. 11 bis 13 weist an dem dem Einlaßventil 20 zugewandten Ende 120 eine Erhebung 124 auf, welche entgegen der Strömungsrichtung stromauf des Ventilschaftes 22 auf der parallel zur Fluidströmung 126 verlaufenden Linie 128 angeordnet ist, welche die Mittelachse 128 des Ventilschaftes 22 schneidet. Hierdurch wird die Fluidströmung 126 um den Ventilschaft 22 herum geleitet, so daß weder von dem Trennblech 30 sich ablösende Flüssigkeiten noch in dem Fluidstrom 126 mitgerissene Partikel auf den Ventilschaft 22 treffen. Dies verhindert wirksam eine Verkokungsablagerung am Ventilschaft 22. Die Erhebung 124 ist beispielsweise dreieckig oder keilförmig ausgebildet. Sollten sich dennoch Ablagerungen am Ventilschaft 22 ergeben, so werden diese in vorteilhafter Weise dadurch abgeschert, daß das Trennblech 30 in einem derartigen Abstand stromauf des Ventilschaftes 22 angeordnet ist, daß das dem Einlaßventil 20 zugewandte Ende 120 des Trennbleches 30 in mechanischen Kontakt mit sich auf dem Ventilschaft 22 ausbildenden Ablagerungen kommt (vgl. Fig. 14B und 14C).

Fig. 14A veranschaulicht eine weitere Maßnahme zum Entfernen von Verkokungsablagerungen vom Einlaßventil 20. Wie dargestellt wirkt eine Nocke 132 der Einlaßnockenwelle über eine Ventildreheinrichtung 134 auf das Einlaßventil 20. Die Ventildreheinrichtung ist lediglich beispielhaft, es ist auch eine Anordnung ohne diese Ventildreheinrichtung 134 möglich. So ist beispielsweise alternativ statt der Ventildreheinrichtung 134 eine außermittige Anordnung von Rollenschlepphebel/Tassenstößel zum Ventilschaft 22 vorgesehen, welche ebenfalls eine Drehung des Einlaßventils 20 um dessen Längsachse 130 hervorruft. Im Einlaßkanal 18 benachbart zum Einlaßventil 20 ist eine Abstreifeinrichtung 136 vorgesehen, welche derart ausgebildet und in einem derartigen Abstand zum Einlaßventil 20 angeordnet ist, daß Ablagerungen am Einlaßventil 20 in mechanischen Kontakt mit der Abstreifeinrichtung 136 kommen. Durch die Drehung 138 des Einlaßventiles 20 werden Ablagerungen auf der Oberfläche der Kehlung 68 und des Ventilschaftes 22 von der Abstreifeinrichtung 136 abgeschert, so daß sich keine den Betrieb der Brennkraftmaschine beeinträchtigende Verkokungsablagerungen an den Einlaßventilen 20 aufbauen können. Die Abstreifeinrichtung 136 hat eine dem Einlaßventil 20 kongruente Kontur und ist beispielsweise als im Zylinderkopf eingegossenes Blech ausgebildet, welches eine Strömungsdynamik im Einlaßkanal 18 nur geringfügig beeinflußt. Die Abstreifeinrichtung 136 folgt möglichst eng der Ventilkontur im Bereich der Kehlung 68 und des Schaftes 22.

Eine alternative Ausführungsform der Erfindung ist in Fig. 14B und Fig. 14C dargestellt. Hier ist das Trennblech 30 derart nah beabstandet zum Ventilschaft 22 angeordnet, daß die Abstreifeinrichtung 136 einstückig mit dem ausgebildet ist bzw. daß das Trennblech selbst die Abstreifeinrichtung 136 ausbildet, indem das Trennblech 30 in einem derartigen Abstand stromauf des Einlaßventils 20 angeordnet ist, daß das dem Einlaßventil 20 zugewandte Ende 120 des Trennbleches 30 in mechanischen Kontakt mit sich auf dem Einlaßventil 20 ausbildenden Ablagerungen kommt. Durch die Bewegung des Einlaßventiles 20 (Hub- bzw. Drehbewegung) werden Ablagerungen auf der Oberfläche des Ventilschaftes 22 von dem ventilseitigen Ende 120 des Trennbleches 30 abgeschert, so daß sich keine den Betrieb der Brennkraftmaschine beeinträchtigende Verkokungsablagerungen an den Einlaßventilen 20 aufbauen können. Wie detaillierter aus Fig. 14C ersichtlich, ist das Trennblech 30 mit der Ausnehmung 122 nahe an den Ventilschaft 22 heran angeordnet, so daß die Ausnehmung 122 den Ventilschaft 22 teilweise umgreift. Dies ermöglichst eine Abstreifung von Verkokungsablagerungen um einen größeren Umfangsabschnitt des Ventilschaftes 22. Am ventilschaftseitigen Ende 120 ist ferner eine Abstreifkante 152 am Trennblech 30 ausgebildet. Beispielsweise beträgt ein Abstand zwischen dem Ende 120 des Trennbleches 30 und dem Einlaßventil 0,1 mm bis 0,5 mm, insbesondere 0,2 mm oder 0,15 mm. Zum wirksamen Entfernen von Verkokungsablagerungen am Einlaßventil 20 ist am ventilschaftseitigen Ende 120 des Trennbleches 30 eine Abstreifkante 152 ausgebildet.

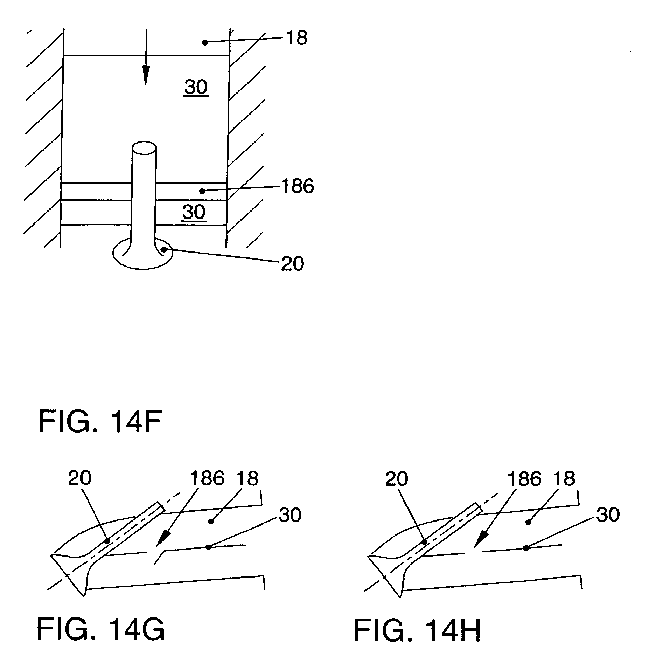

Eine Weiterbildung des Trennbleches 30, beispielsweise des Trennbleches mit integrierter Abstreifvorrichtung oder des Trennbleches mit Leiteinrichtung für die Fluidströmung vorbei am Ventilschaft 22, ist in den Fig. 14F bis 14H dargestellt. Wie aus den Fig. 14F und 14G ersichtlich, weist das Trennblech 30 senkrecht zur Längsachse desselben einen beispielsweise 2 mm bis 3 mm breiten Schlitz 186 auf, der die gesamte Breite des Trennbleches 30 einnimmt. Dies ermöglicht den auf dem Trennblech 30 befindlichen Rückständen, wie Öl, Kraftstoff etc., das Ablaufen auf den Boden des Einlaßkanals 18 und damit das bessere Abließen in den Brennraum beim Öffnen des Einlaßventils 20. Beispielsweise ist der Ablaufschlitz 186 mit einem Ablauffalz 188 versehen, wie aus Fig. 14G ersichtlich. Auf diesen kann jedoch auch verzichtet werden, wie aus Fig. 14H ersichtlich.

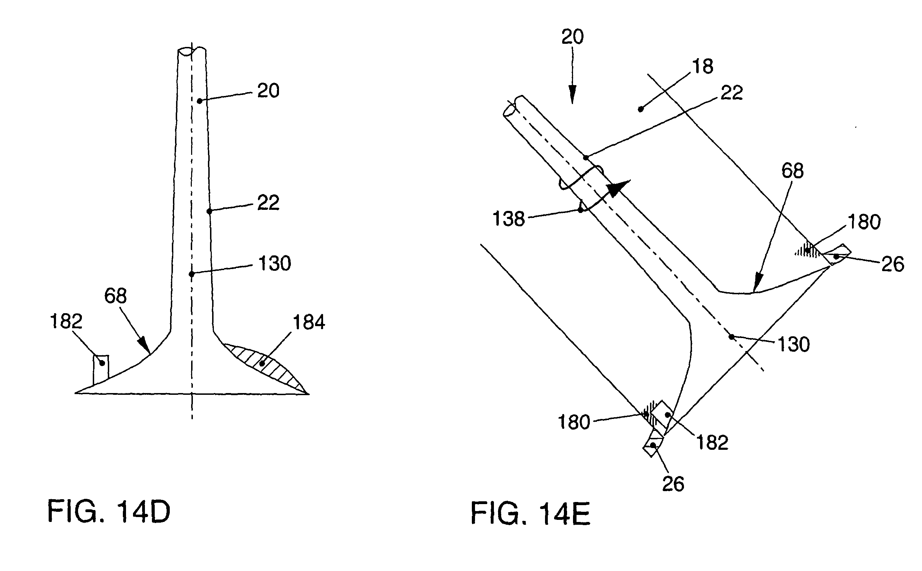

Umfangreiche Untersuchungen der letzen Zeit haben ergeben, daß in überraschender Weise auch Ablagerungen im Bereich des Ventilsitzringes 26 des Einlaßventils 20 für die einleitend beschriebenen Phänomene verantwortlich sind. Es kommt zur Bildung einer "Verkokungslippe" 180 im Bereich des Sitzringes 26, wie in Fig. 14E dargestellt. Die Mechanik eines Ventiltriebs moderner Brennkraftmaschinen ist so ausgelegt, daß es ab einer bestimmten Motordrehzahl zu einer mehr oder weniger schnellen Eigendrehung (Pfeil 138 in Fig. 14A und Fig. 14E) der Einlaßventile 20 kommt, d.h. das Einlaßventil 20 führt während des Öffnens und Schließens eine translatorische Bewegung entlang der Ventillängsachse 130 und eine Rotationsbewegung um die Ventillängsachse 130 durch. Auf der Tulpe 68 des Einlaßventils 20 wird erfindungsgemäß eine Einrichtung befestigt, welche derart angeordnet und ausgebildet ist, daß durch die Eigendrehung des Ventils 20 ein Abstreifmechanismus zwischen Ventiltulpe 68 und Sitzring 26 entsteht und damit Ansammlungen von Verbrennungsrückständen im kritischen Bereich des Ventilsitzringes 26 verhindert werden. Eine erste Variante ist in Fig. 14D und Fig. 14E dargestellt und umfaßt einen Stift oder Bolzen 182, der an der Ventiltulpe 68 benachbart zum Sitzring 68 befestigt ist. Fig. 14E veranschaulicht, wie dieser Stift bzw. Bolzen 182 einen vorbestimmten Bereich etwaiger Ablagerungen überstreicht und dementsprechend Ablagerungen abschert. In einer aus Fig. 14D ersichtlichen alternativen Ausführungsform ist ein Blech 184 an der Ventiltulpe 68 befestigt. Die im Bereich des Sitzringes 26 abstreifenden Einrichtungen 182 bzw. 184 sind beispielsweise mittels Schweißen, Laserschweißen oder Aufschrumpfen auf der Tulpe 68 des Einlaßventils 20 befestigt.

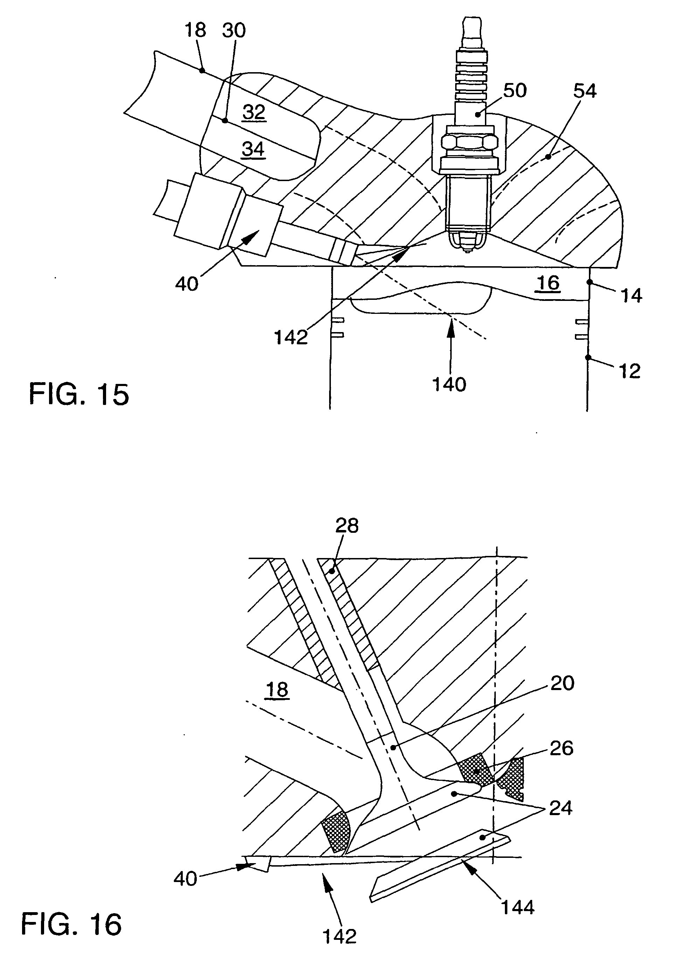

Ein weiterer Ansatz gegen betriebsbeeinträchtigende Verkokungsablagerungen der Einlaßventile 20 betrifft eine Weiterbildung der Einspritzvorrichtung 40, wie in Fig. 15 und 16 veranschaulicht. Die Einspritzvorrichtung 40 spritzt einen Kraftstoffstrahl 140 in den Brennraum 16 ein. Zusätzlich ist die Einspritzvorrichtung 40 derart ausgebildet und angeordnet, daß bei geöffnetem Einlaßventil 20 (Fig. 16) ein Teil des eingespritzten Kraftstoffes auf den Ventilteller 24 des Einlaßventils 20 trifft. Hierzu weist die Einspritzvorrichtung 40 wenigstens eine zusätzliche Öffnung, insbesondere zwei zusätzliche Öffnungen, auf, durch die wenigstens ein zusätzlicher Kraftstoffstrahl 142 in den Brennraum eingespritzt wird. Dieser zusätzliche Kraftstoffstrahl 142 ist dabei derart ausgerichtet, daß er auf das geöffnete Einlaßventil 20 trifft, wie aus Fig. 16 ersichtlich. In Fig. 16 ist das geöffnete Einlaßventil 20 lediglich durch den Ventilteller 24 bei 144 angedeutet. Durch den Kraftstoff am Ventilteller 24 ergibt sich eine Reinigung desselben, welche einen Aufbau von Verkokungsablagerungen am Einlaßventil in einem solchen Ausmaß, daß die Betriebssicherheit und das Betriebsverhalten der Brennkraftmaschine beeinträchtigt ist, verhindert. Mit anderen Worten ist eine Spülung des Ventiltellers 24 und der Kehlung 68 realisiert. Ggf. erfolgt der Ausstoß des zusätzlichen Kraftstoffstrahls 142 nicht in jedem Zyklus der zyklischen Taktfolge in den Arbeitszylindern, sondern nur temporär.

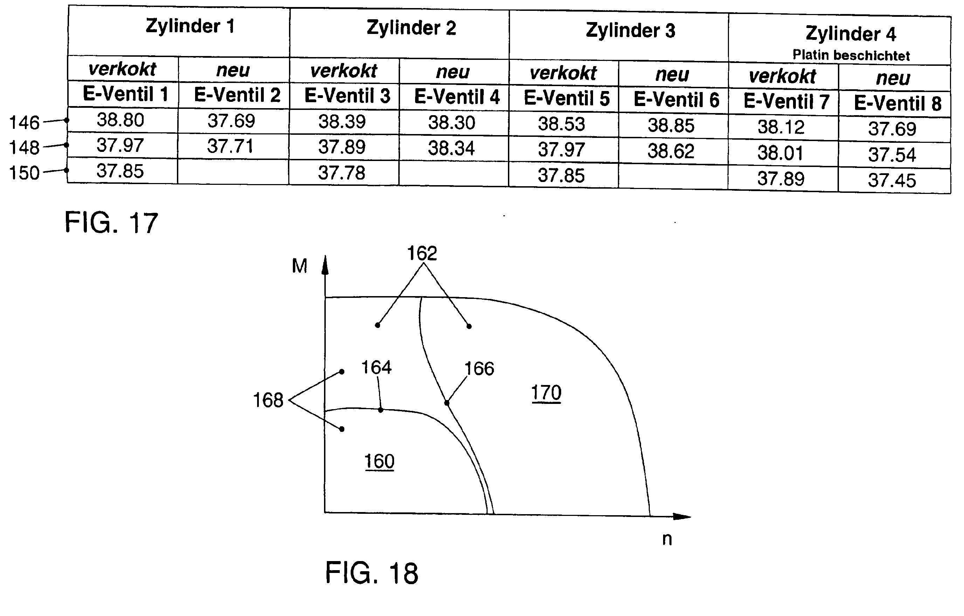

Ein weiterer Ansatz zum Abbau von Verkokungsablagerungen betrifft die Ladungsbewegungsklappe 36. Fig. 18 veranschaulicht ein Last-Drehzahl-Kennfeld mit einem Schichtbetrieb-Bereich 160 und einem Homogenbetrieb-Bereich 162. Eine Linie 164 trennt den Schichtbetrieb-Bereich 160 von dem Homogenbetrieb-Bereich 162. Ferner trennt eine Linie 166 das Last-Drehzahl-Kennfeld in einen ersten Bereich 168 und einen zweiten Bereich 170. Im ersten Bereich 168 ist die Ladungsbewegungsklappe 36 geschlossen, um eine ausreichende Tumbleströmung zu gewährleisten und im zweiten Bereich ist die Ladungsbewegungsklappe 36 geöffnet, um eine ausreichende Zylinderfüllung zu gewährleisten. Erfindungsgemäß ist es nunmehr vorgesehen, daß entgegen der Vorgabe des Last-Drehzahl-Kennfeldes die Ladungsbewegungsklappe 36 kurzzeitig geschlossen wird, wenn sich die Brennkraftmaschine an einem Betriebspunkt im zweiten Bereich 170 befindet. Während dieser Schließzeit werden in überraschender Weise ggf. vorhandene Verkokungsablagerungen an den Einlaßventilen 20 in ausreichender Weise abgebaut, so daß eine betriebsbedingte Verkokung der Einlaßventile 20 keinen negativen Einfluß auf die Betriebssicherheit und das Betriebsverhalten der Brennkraftmaschine hat.

Beispielsweise wird dies im normalen Betrieb des Brennkraftmaschine, insbesondere im Fahrbetrieb des mit dieser Brennkraftmaschine ausgerüsteten Kraftfahrzeuges, wiederholt kurzzeitig ausgeführt. Hierbei hat sich eine wiederholte Schließzeit von 1 Sekunde bis 10 Sekunden als ausreichend herausgestellt. Diese kurze Schließzeit ermöglicht, daß Fahrzeuginsassen von den Folgen dieses dem Kennfeld nicht entsprechenden Betriebes der Brennkraftmaschine nichts bemerken. Diese Folgen sind beispielsweise eine verringerte Leistung bzw. ein unruhigerer Lauf der Brennkraftmaschine.

Alternativ oder zusätzlich wird die Schließung der Ladungsbewegungsklappe 36 im zweiten Bereich 170 im Zuge von Reparatur- oder Wartungsmaßnahmen ausgeführt. In diesem Fall beträgt die Schließzeit beispielsweise 15 min bis 60 min, insbesondere 30 min. Zur weiteren Unterstützung des Abbaus von Verkokungen an den Einlaßventilen hat es sich als vorteilhaft herausgestellt, gleichzeitig den Zündwinkel auf spät oder früh zu verstellen, die Einlaßnockenwelle nach früh zu verstellen, eine hohe Abgasrückführrate einzustellen, den Einspritzzeitpunkt nach spät zu verschieben und/oder einen Wert für Lambda von größer 1 einzustellen. Die vorgenannten Maßnahmen betreffend Ladungsbewegungsklappe und weitere Betriebsparameter werden beispielsweise in ein Motorsteuergerät eingebunden und als Reparaturlösung im Kundendienst, beispielsweise bei der Inspektion, oder als regelmäßige Maßnahme im normalen Fahrbetrieb umgesetzt.

Zur Veranschaulichung der Wirkung dieses Verfahrens zur Reinigung der Einlaßventile 20 von Verkokungsablagerungen wurde folgender Versuch durchgeführt: In einen Ottomotor mit vier Zylindern und je zwei Einlaßventilen 20 pro Zylinder wurden bei den Zylindern eins bis drei je ein neues und ein mit starken Verkokungsablagerungen behaftetes Einlaßventil 20 eingebaut. In Zylinder vier wurden zwei lediglich leicht verkokte, mit Platin beschichtete Einlaßventile 20 eingebaut. Alle Einlaßventile 20 wurden im Einbauzustand verwogen. Die entsprechend ermittelten Gewichte sind in der Tabelle von Fig. 17 in Zeile 146 in g angegeben. Der Ottomotor wurde bei geschlossener Ladungsbewegungsklappe im zweiten Bereich 170 des Last-Drehzahl-Kennfeldes für 30min betrieben. Anschließend wurden die Einlaßventile 20 wieder verwogen. Die hierbei ermittelten Gewichte sind in der Tabelle von Fig. 17 in Zeile 148 in g angegeben. Es ergibt sich anschaulich, daß die mit Verkokungsablagerung versehenen Einlaßventile 20 deutlich an Gewicht verloren haben, was bedeutet, daß durch den vorgenannten Motorbetrieb die auf diesen Einlaßventilen 20 abgelagerten Rückstände nahezu vollständig verascht wurden. Diese Veraschung ist vermutlich wenigstens teilweise auf erhöhte Temperaturen der Einlaßventile auf über 380°C zurück zu führen. Dagegen ist eine nur geringe Gewichtszunahme bei den im Neuzustand eingebauten Einlaßventilen zu beobachten, was bedeutet, daß sich keine wesentlichen Verkokungsablagerungen beim Betrieb des Motors bei den genannten Betriebsbedingungen aufbauen. In der Tabelle von Fig. 17 in Zeile 150 sind desweiteren Gewichte in g angegeben, die sich nach einer weiteren mechanischen Reinigung derjenigen Einlaßventile 20 ergeben, die mit Verkokungsablagerungen eingebaut wurden. Es ist ersichtlich, daß die mechanische Reinigung nur unwesentliche Gewichtsabnahmen bewirkt, was bedeutet, daß nach der o.g. Heißmaßnahme nur wenig Verkokungsablagerungen auf den Einlaßventilen 20 zurück bleiben. Eine weitere Verstärkung des Reinigungseffektes erzielt man dadurch, daß während des Betriebs mit den o.g. Einstellungen eine Kühlwassertemperatur erhöht wird.

Eine weitere Maßnahme gegen betriebsbeeinträchtigende Verkokungsablagerungen der Einlaßventile 20 liegt darin, in Schubphasen eines Kraftfahrzeuges, das mit dem Ottomotor mit Direkteinspritzung versehen ist, eine im Ansaugkanal angeordnete Drosselklappe zu öffnen. Dies vermeidet ein potentielles Druckgefälle zwischen Brennraum und Einlaßtrakt.

In der Kurbelgehäuseentlüftung 62 (Fig. 1) wird zweckmäßigerweise Öl, welches in den Blow-By-Gasen 60 enthalten ist, abgeschieden. Eine zusätzliche oder verstärkte Ölabscheidung beeinflußt die vorgenannten Maßnahmen gegen die Verkokung des Einlaßventils weiter positiv, da weniger potentiell ablagerungsfähige Anteile durch den Einlaßkanal 18 am Einlaßventil 20 vorbei strömen.

Eine weitere Maßnahme zum Abbau von Verkokungsablagerungen betrifft das Eindosieren bzw. Einspritzen ein Verkokungsablagerungen lösendes Mittel in den Ansaugkanal während des Laufes der Brennkraftmaschine, so daß diese das entsprechende Einlaßventil 20 benetzen und Verkokungen lösen. Dieses Einspritzen kann mit einer zusätzlichen Einspritzeinrichtung beispielsweise temporär während des normalen Betriebes der Brennkraftmaschine erfolgen. Dadurch werden während des Betriebs der Brennkraftmaschine Ablagerungen am Einlaßventil in solchem Umfang abgebaut, daß eine betriebsbedingte Verkokung der Einlaßventile keinen negativen Einfluß auf die Betriebssicherheit und das Betriebsverhalten der Brennkraftmaschine zeigt. Statt dessen oder zusätzlich ist es vorgesehen, daß im Rahmen von Reparatur- oder Wartungsarbeiten die Brennkraftmaschine stationär betrieben wird, beispielsweise zu Meß- oder Prüfzwecken, und gleichzeitig in der Werkstatt während dieses Betriebes Verkokungslöser in den Ansaugkanal 18 eingespritzt bzw. eindosiert werden. Auf diese Weise werden ggf. vorhandene Vorkokungsablagerungen regelmäßig entfernt, so daß diese keine solchen Ausmaße annehmen können, daß sie den Betrieb der Brennkraftmaschine beeinträchtigen. Das Verkokungsablagerungen lösende Mittel wird beispielsweise über einen Flansch für ein Trennblech in den Ansaugkanal eindosiert oder eingespritzt.

Es hat sich ferner als besonders vorteilhaft erwiesen, einen Kontakt von Öl, welches kein Verkokungen lösendes Additiv enthält, mit dem Einlaßventil so weit wie möglich zu verringern, denn es hat sich in überraschender Weise herausgestellt, daß dadurch ein Aufbau von Verkokungsschichten auf den Einlaßventilen über einen Großteil des üblichen Betriebsbereiches der Brennkraftmaschine verhindert oder zumindest erheblich reduziert ist. Hierzu ist die Ventilschaftabdichtung derart ausgebildet, daß sie eine Öldurchlässigkeit kleiner 0,003 g/h aufweist. Eine weitere vorteilhafte Reduzierung der mit dem Einlaßventil in Kontakt kommenden Ölmenge erzielt man dadurch, daß jeweilige Kolbenringpakete von Arbeitskolben der Brennkraftmaschine derart ausgebildet sind, daß in den Brennraum zurückgeführtes Öl einen Wert von kleiner 3 g/h pro Arbeitszylinder bei Nenndrehzahl aufweist, und/oder daß der Ölabscheider der Kurbelgehäuseentlüftung derart ausgebildet ist, daß dieser eine Öldurchlässigkeit von kleiner 5 g/h aufweist.

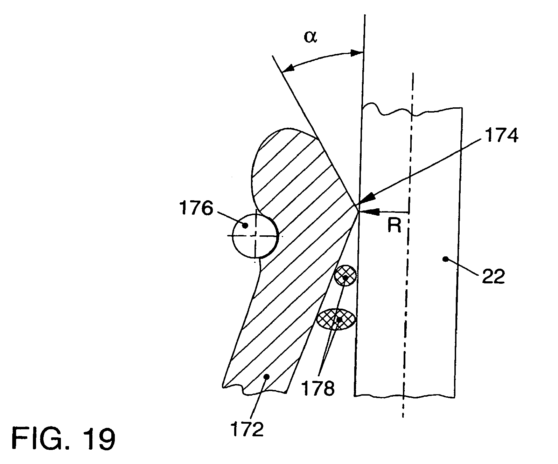

Fig. 19 zeigt beispielhaft eine bevorzugte Ausführungsform einer erfindungsgemäßen Ventilschaftabdichtung 172 für einen Ventilschaft 22 eines Einlaßventiles. Diese Ventilschaftabdichtung 172 umfaßt einen am Ventilschaft 22 anliegende Dichtstelle 174 mir Radius R und schließt an einer Seite der Dichtstelle 174 mit dem Ventilschaft 22 einen Winkel α ein. Ferner wirkt die Ventilschaftabdichtung 172 mit einer Feder 176 und zusätzlichen Abstützungen 178 zusammen. Die Öldurchlässigkeit der Ventilschaftabdichtung 172 wird über die Optimierung der Parameter α, R und Federkraft der Feder 176 eingestellt. Eine Reduzierung von toleranzbedingten Streuungen der Öldurchlässigkeitswerte erzielt man durch die zusätzlichen Abstützungen 178, welche jeder Ventilschaftabdichtung 172 paarweise zugeordnet sind.

## Patentansprüche

1. Brennkraftmaschine, insbesondere Ottomotor, insbesondere eines Kraftfahrzeuges, mit einer Einspritzvorrichtung (40) für Kraftstoff (42), welche derart angeordnet und ausgebildet ist, dass diese den Kraftstoff (42) direkt in einen Brennraum (16) von Arbeitszylindern (14) der Brennkraftmaschine einspritzt, und mit wenigstens einer Einlassventileinheit pro Arbeitszylinder (14), welche ein Einlassventil (20) und einen Einlassventilsitz aufweist, **dadurch gekennzeichnet, dass** bei wenigstens einer Einlassventileinheit das Einlassventil mit wärmeableitenden Maßnahmen in Form eines Hohlschaftventils mit Na-K-Füllung ausgebildet ist, so dass ein Bereich (84) des Last-Drehzahl-Kennfeldes mit Oberflächentemperaturen im Bereich der Kehlung (68) des Einlassventils (20) unter 180°C bzgl. dem entsprechenden Bereich (84) des Last-Drehzahl-Kennfeldes ohne diese wärmeableitenden Maßnahmen derart vergrößert ist, dass im Betrieb der Brennkraftmaschine ein Aufbau von Verkokungsablagerungen am Einlassventil (20) reduziert ist.

2. Brennkraftmaschine nach Anspruch 1, **dadurch gekennzeichnet, dass** sich der Bereich (84) des Last-Drehzahl-Kennfeldes mit Oberflächentemperaturen im Bereich der Kehlung (68) des Einlassventils (20) unter 180°C wenigstens über ein Drittel des gesamten Last-Drehzahl-Kennfeldes erstreckt.

3. Brennkraftmaschine nach wenigstens einem der vorhergehenden Ansprüche, **dadurch gekennzeichnet, dass** ein am Einlassventilsitz der wenigstens einen Einlassventileinheit angeordneter Sitzring (26) aus einem Werkstoff mit hoher Wärmeleitfähigkeit ausgebildet ist.

4. Brennkraftmaschine nach wenigstens einem der vorhergehenden Ansprüche, **dadurch gekennzeichnet, dass** das Einlassventil (20) der wenigstens einen Einlassventileinheit aus einem Werkstoff mit niedriger Wärmekapazität ausgebildet ist.

5. Brennkraftmaschine nach wenigstens einem der vorhergehenden Ansprüche, **dadurch gekennzeichnet, dass** das eine Einlassventil (20) der wenigstens einen Einlassventileinheit aus einem Werkstoff mit hoher Wärmeleitfähigkeit ausgebildet ist.

6. Brennkraftmaschine nach wenigstens einem der vorhergehenden Ansprüche, **dadurch gekennzeichnet, dass** im Bereich eines Ventilbodens (8) des Einlassventiles (20) der wenigstens einen Einlassventileinheit eine wärmeisolierende Schicht (90), insbesondere eine Keramikschicht, ausgebildet ist.

7. Brennkraftmaschine nach wenigstens einem der vorhergehenden Ansprüche, **dadurch gekennzeichnet, dass** das Einlassventil (20) der wenigstens einen Einlassventileinheit eine Hülse (92) aufweist, welche einen Teil des Schaftes (22), die Kehlung (68) des Einlassventiles (20) sowie wenigstens einen Teil einer dem Brennraum abgewandten Seite (94) des Ventiltellers (24) des Einlassventiles (20) derart überdeckt, dass zwischen Einlassventil (20) und Hülse (92) ein Luftspalt (96) ausgebildet ist.

8. Brennkraftmaschine nach wenigstens einem der vorhergehenden Ansprüche, **dadurch gekennzeichnet, dass** diese eine Einrichtung (64) zur Abgasrückführung aufweist, welche zur Entnahme von Abgas mit dem Abgastrakt (54) und zur Rückführung des Abgases mit dem Ansaugtrakt (18) der Brennkraftmaschine verbunden ist, wobei die Verbindung mit dem Abgastrakt (54) stromab eines im Abgastrakt (54) angeordneten Vorkatalysators (56) ausgebildet ist.

9. Brennkraftmaschine nach Anspruch **8, dadurch gekennzeichnet, dass** die Einrichtung (64) zur Abgasrückführung einen Partikelfilter (100) aufweist.

10. Brennkraftmaschine nach Anspruch 8 oder 9, **dadurch gekennzeichnet, dass** die Einrichtung zur Abgasrückführung (54) eine Einrichtung zum Kühlen des zurückgeführten Abgases aufweist.

11. Verfahren zum Betreiben einer Brennkraftmaschine, welche gemäß wenigstens einem der vorhergehenden Ansprüche ausgebildet ist, **dadurch gekennzeichnet, dass** während des Betriebs der Brennkraftmaschine in dem Bereich des Last-Drehzahl-Kennfeldes mit Einlassventiltemperatur unter 180°C zusätzlich eine Temperatur des Kühlwassers gegenüber dem Betrieb außerhalb dieses Bereiches des Last-Drehzahl-Kennfeldes, beispielsweise um 10°C, erniedrigt wird.

12. Verfahren zum Betreiben einer Brennkraftmaschine, welche gemäß wenigstens einem der Ansprüche 1 bis 10 ausgebildet ist, insbesondere nach Anspruch 12, **dadurch gekennzeichnet, dass** ein rückzuführendes Abgas einem Abgastrakt stromab eines Vorkatalysators entnommen wird.

13. Verfahren zum Betreiben einer Brennkraftmaschine, welche gemäß wenigstens einem der Ansprüche 1 bis 10 ausgebildet ist, insbesondere nach wenigstens einem der Ansprüche 11 oder 12, **dadurch gekennzeichnet, dass** ein rückzuführendes Abgas gekühlt wird.

## Claims

1. Internal combustion engine, in particular a spark ignition engine, in particular of a motor vehicle, having an injection device (40) for fuel (42), which is arranged and designed in such a way that it injects the fuel (42) directly into a combustion chamber (16) of working cylinders (14) of the internal combustion engine, and having at least one inlet valve unit per working cylinder (14), which has an inlet valve (20) and an inlet valve seat, **characterized in that** in at least one inlet valve unit, the inlet valve is designed with heat dissipating measures in the form of a hollow-stem valve with Na-K filling in such a way that an area (84) of the load-engine speed characteristics map with surface temperatures in the area of the grooves (68) of the inlet valve (20) below 180°C is enlarged in relation to the corresponding area (84) of the load-engine speed characteristics map without said heat dissipating measures in such a way that, during the operation of the internal combustion engine, a build-up of coking depositions on the inlet valve (20) is reduced.

2. Internal combustion engine according to Claim 1, **characterized in that** the area (84) of the load-engine speed characteristics map with surface temperatures in the area of the grooves (68) of the inlet valve (20) below 180°C extends over at least one-third of the entire load-engine speed characteristics map.

3. Internal combustion engine according to at least one of the preceding claims, **characterized in that** a valve seat insert (26) arranged on the inlet valve seat of the at least one inlet valve unit is formed from a material with high thermal conductivity.

4. Internal combustion engine according to at least one of the preceding claims, **characterized in that** the inlet valve (20) of the at least one inlet valve unit is formed from a material with a low heat capacity.

5. Internal combustion engine according to at least one of the preceding claims, **characterized in that** an inlet valve (20) of the at least one inlet valve unit is formed from a material with high thermal conductivity.

6. Internal combustion engine according to at least one of the preceding claims, **characterized in that** a thermally insulating layer (90), in particular a ceramic layer, is formed in the area of a valve bottom (8) of the inlet valve (20) of the at least one valve unit.

7. Internal combustion engine according to at least one of the preceding claims, **characterized in that** the inlet valve (20) of the at least one inlet valve unit has a sleeve (92) which covers a part of the shank (22), the grooves (68) of the inlet valve (20) and at least a part of a side (94), which faces towards the combustion chamber, of the valve plate (24) of the inlet valve (20) in such a way that an air gap (96) is formed between the inlet valve (20) and the sleeve (92).

8. Internal combustion engine according to at least one of the preceding claims, **characterized in that** said internal combustion engine has a device (64) for exhaust gas recirculation, which device (64) is connected to the exhaust tract (54) for the extraction of exhaust gas and to the intake tract (18) of the internal combustion engine for recirculation of the exhaust gas, wherein the connection to the exhaust tract (54) is formed downstream of a pre-catalytic converter (56) which is arranged in the exhaust tract (54).

9. Internal combustion engine according to Claim 8, **characterized in that** the device (64) for exhaust gas recirculation has a particulate filter (100).

10. Internal combustion engine according to Claim 8 or 9, **characterized in that** the device (64) for exhaust gas recirculation has a device for cooling the recirculated exhaust gas.

11. Method for the operation of an internal combustion engine, which is designed according to at least one of the preceding- claims, **characterized in that**, during the operation of the internal combustion engine, in the area of the load-engine speed characteristics map with inlet valve temperature below 180°C, a temperature of the coolant is also lowered, for example by 10°C, as compared to the operation outside this area of the load-engine speed characteristics map.

12. Method for the operation of an internal combustion engine, which is designed according to at least one of Claims 1 to 10, in particular according to Claim 11, **characterized in that** an exhaust gas which is to be recirculated is extracted from an exhaust tract downstream of a pre-catalytic converter.

13. Method for the operation of an internal combustion engine, which is designed according to at least one of Claims 1 to 10, in particular according to at least one of Claims 11 or 12, **characterized in that** an exhaust gas which is to be recirculated is cooled.

## Revendications

1. Moteur à combustion interne, en particulier moteur à allumage par étincelle, notamment pour un véhicule automobile, comprenant un dispositif d'injection (40) de carburant (42), qui est disposé et conçu de telle sorte qu'il injecte le carburant (42) directement dans une chambre de combustion (16) de cylindres de travail (14) du moteur à combustion interne, et comprenant au moins une unité de soupape d'admission par cylindre de travail (14), qui présente une soupape d'admission (20) et un siège de soupape d'admission, **caractérisé en ce que** pour au moins une unité de soupape d'admission, la soupape d'admission est réalisée avec des mesures de dissipation de la chaleur sous la forme d'une soupape à tige creuse remplie de Na-K, de telle sorte qu'une région (84) du champ caractéristique du régime de charge avec des températures de surface dans la région de la cannelure (68) de la soupape d'admission (20) en dessous de 180°C soit augmentée par rapport à la région correspondante (84) du champ caractéristique de régime de charge sans ces mesures de dissipation de la chaleur, de telle sorte que pendant le fonctionnement du moteur à combustion interne, la formation de dépôts de cokéfaction au niveau de la soupape d'admission (20) soit réduite.

2. Moteur à combustion interne selon la revendication 1, **caractérisé en ce que** la région (84) du champ caractéristique de régime de charge avec des températures de surface dans la région de la cannelure (68) de la soupape d'admission (20) en dessous de 180°C s'étend sur au moins un tiers de l'ensemble du champ caractéristique du régime de charge.

3. Moteur à combustion interne selon au moins l'une quelconque des revendications précédentes, **caractérisé en ce qu'**une bague de siège (26) disposée sur le siège de soupape d'admission de l'au moins une unité de soupape d'admission est réalisée en un matériau ayant une grande conductibilité thermique.

4. Moteur à combustion interne selon au moins l'une quelconque des revendications précédentes, **caractérisé en ce que** la soupape d'admission (20) de l'au moins une unité de soupape d'admission est réalisée en un matériau ayant une faible capacité thermique.

5. Moteur à combustion interne selon au moins l'une quelconque des revendications précédentes, **caractérisé en ce que** ladite une soupape d'admission (20) de l'au moins une unité de soupape d'admission est réalisée en un matériau ayant une grande conductibilité thermique.

6. Moteur à combustion interne selon au moins l'une quelconque des revendications précédentes, **caractérisé en ce que** dans la région d'un fond de soupape (8) de la soupape d'admission (20) de l'au moins une unité de soupape d'admission, est réalisée une couche (90) calorifuge, notamment une couche en céramique. '

7. Moteur à combustion interne selon au moins l'une quelconque des revendications précédentes, **caractérisé en ce que** la soupape d'admission (20) de l'au moins une unité de soupape d'admission présente une douille (92) qui recouvre une partie de la tige (22), la cannelure (68) de la soupape d'admission (20) ainsi qu'au moins une partie d'un côté (94) de la tête de soupape (24) de la soupape d'admission (20) opposé à la chambre de combustion, de telle sorte qu'entre la soupape d'admission (20) et la douille (92) soit réalisé un entrefer (96).

8. Moteur à combustion interne selon au moins l'une quelconque des revendications précédentes, **caractérisé en ce que** celui-ci présente un dispositif (64) pour la recirculation des gaz d'échappement, qui est connecté au conduit de gaz d'échappement (54) pour prélever des gaz d'échappement et au conduit d'aspiration (18) du moteur à combustion interne pour la recirculation des gaz d'échappement, la connexion au conduit de gaz d'échappement (54) étant réalisée en aval d'un précatalyseur (56) disposé dans le conduit de gaz d'échappement (54).

9. Moteur à combustion interne selon la revendication 8, **caractérisé en ce que** le dispositif (64) pour la recirculation des gaz d'échappement présente un filtre à particules (100).

10. Moteur à combustion interne selon la revendication 8 ou 9, **caractérisé en ce que** le dispositif (64) pour la recirculation des gaz d'échappement présente un dispositif de refroidissement du gaz d'échappement recirculé.

11. Procédé pour faire fonctionner un moteur à combustion interne qui est réalisé selon au moins l'une quelconque des revendications précédentes, **caractérisé en ce que** pendant le fonctionnement du moteur à combustion interne dans la région du champ caractéristique de régime de charge avec une température de soupape d'admission en dessous de 180°C, une température de l'eau de refroidissement est abaissée par rapport au fonctionnement en dehors de cette région du champ caractéristique de régime de charge, par exemple de 10°C.

12. Procédé pour faire fonctionner un moteur à combustion interne qui est réalisé selon au moins l'une quelconque des revendications 1 à 10, notamment selon la revendication 11, **caractérisé en ce qu'**un gaz d'échappement de recirculation est prélevé d'un conduit de gaz d'échappement en aval d'un précatalyseur.

13. Procédé pour faire fonctionner un moteur à combustion interne qui est réalisé selon au moins l'une quelconque des revendications 1 à 10, notamment selon l'une quelconque des revendications 11 ou 12, **caractérisé en ce qu'**un gaz d'échappement de recirculation est refroidi.
